(19) Europäisches Patentamt / European Patent Office / Office européen des brevets

(11) **EP 1 324 165 B1**

(12) **EUROPEAN PATENT SPECIFICATION**

(45) Date of publication and mention
of the grant of the patent:
**07.11.2007 Bulletin 2007/45**

(51) Int Cl.:
***G05B 13/02*** *(2006.01)*

(21) Application number: **02425783.4**

(22) Date of filing: **18.12.2002**

(54) **Automatic method and system for determining the optimum strategy for controlling a complex industry system in particular for managing water supply networks by means of an ecosystem model**

Automatisierungsmethode und -system zur Ermittlung der optimalen Strategie zur Steuerung eines Komplexen industriellen Systemes insbesondere zum Betrieb von Waterlieferungsnetzen mit Hilfe eines Ecosystem-Models

Procédé et système automatique pour déterminer la stratégie optimale pour la commande d'un système industriel compliqué notamment pour la gestion des reseaux de distribution de l'eau avec un modèle ecosysteme

(84) Designated Contracting States:
**AT BE BG CH CY CZ DE DK EE ES FI FR GB GR IE IT LI LU MC NL PT SE SI SK TR**

(30) Priority: **28.12.2001 IT RM20010775**

(43) Date of publication of application:
**02.07.2003 Bulletin 2003/27**

(73) Proprietor: **Proteo S.p.A.**
**95123 Catania (IT)**

(72) Inventor: **Gueli, Roberto**
**95123 Catania (IT)**

(74) Representative: **Iannone, Carlo Luigi et al**
**Barzanò & Zanardo Roma S.p.A.**
**Via Piemonte 26**
**00187 Roma (IT)**

(56) References cited:
**WO-A-01/23966**          **WO-A-01/96076**
**DE-C- 4 304 676**       **US-B1- 6 324 529**

• **FROESE T ET AL: "Optimization of a water-treatment system with fuzzy logic control" FUZZY SYSTEMS, 1994. IEEE WORLD CONGRESS ON COMPUTATIONAL INTELLIGENCE., PROCEEDINGS OF THE THIRD IEEE CONFERENCE ON ORLANDO, FL, USA 26-29 JUNE 1994, NEW YORK, NY, USA,IEEE, 26 June 1994 (1994-06-26), pages 1614-1619, XP010122507 ISBN: 0-7803-1896-X**

## Description

This invention relates to a method and an automatic system for determining the optimum management strategy for a complex industrial system by means of an ecosystem model.

In more detail, this invention relates to multicriterion optimisation of a complex industrial system by means of techniques and algorithms which form a development of conventional Genetic Algorithms (GA) and of fuzzy algorithms. In particular, an optimisation method for management of water networks (aqueducts, sewerages, depuration plants).

Complex Industrial System

Under the term of complex industrial system, a system integrating flows and mechanisms belonging to different domains (matter, energy, information, operation) is to be understood. It is comprised of the following items:

a) a series of control points of a plant or a system;
b) a physic parameter assembly defining the status and/or the operation of a plant or a system;
c) an assembly of material and/or energy and/or information and/or operation streams;
d) a set of nodes though which the streams quoted in item c) flow and/or combine themselves;
e) a directly or indirectly operable device and/or mechanism assembly, adapted to be operated on said streams and/or materials;
f) a set of variables adapted to describe the streams, mechanisms, devices, nodes and controls according to the previous items.

A complex system is defined as a "dynamic system" when the variables on which it depends are function of the time and as a "variable system" when also the parameters describing its status are function of the time, due to ageing which the concerned plants and systems are subject to.

An example of complex industrial or technologic system is an integrated water system, which provides for collecting, conveying, treating and distributing drinkable water volumes, removing and treating wastes and returning them to the collecting body.

Reference will be made henceforth always to the particular case of a system consisting in a water network, but it should be understood that this invention can be applied to any complex industrial system.

When it is desired to control a process and particularly to control and to adjust the transportation of water volumes, and consequently to control the network designed to convey, to distribute and to drain waters, it is necessary to utilise streams of energy and information, for instance energy streams to supply the servo mechanisms and data streams to acquire field measurements and to apply control signals. The energy and information streams belong to different domains with respect to the water volume domain and the supports through which they flow are different.

The coordinated operation of the different technologic networks, interconnected at plant control points (tanks, pumping stations, valves, detection points, treating plants and like), should allow for adjusting the water volumes conveyed in the drinkable water supplying networks and, more generally, they should allow to control collecting, treating and distributing drinkable water volumes and thereafter collecting, treating and returning the wastes.

In broad sense, this applies to any technologic system, namely the management of a system should always allow to control the variables defining the status and the operability of the system itself.

The case of a water system is of particular interest because it includes not only those components that are necessary from a strictly functional point of view for the concerned service (such as the collection, the transportation, the treatment and the distribution of drinkable water volumes, the waste management, and like), but also variables uniquely associated to the materials and devices utilised, in particular to the problem relating to the control of the leakages in the water distribution networks. These two component classes, with inclusion of the energy and enterprise management variables, define the complexity frame of the problem related to the (water) system to be managed.

In particular, the control of the lost volumes results from the actions of all above mentioned components, since they have noticeable technical, economic and environmental consequences.

Under the term of lost volume, the difference between the volume introduced into the distribution network and the volumes delivered to the users is to be construed. Such difference only occasionally can be related to plant maintainment, wash waters or to malfunctioning, failures or overflow discharges; it is mainly related to the leakages due to improper seals in conduits, joints, control members and tanks. It is considered as physiologic for a plant losing 10% of the inlet volumes, but, according to data furnished by the Italian national statistical institute (ISTAT), relating to 1987 (A. Bossola, 1992), the Italian national average value is 27%. The same ISTAT source indicates that the average value of the volumes lost in plants located in southern Italy is 40%. Such water volumes are anyway collected, treated and conveyed even if they are not delivered to the users and, therefore, they constitute a heavy item in the management costs for unit volume delivered to the users as well as in the impoverishment of the resource. According to the ISTAT search results, a difference of about 2.2 billion m³/year exists between the water amount inlet into the network and the delivered one, thereby determining a significant economic loss as well as an impoverishment of the natural water resource.

It is necessary, therefore, to manage the water resource with rationality, efficiency and economy criteria, by optimum utilisation not only of the resource itself, but also of the energy and of the human and technological resources connected with its management. The above evidences the relevance of the control activities extended to all processes comprising the "water cycle".

The quality of this service (continuity and proper response to the demand) depends on the capability to accurately define the status of the network and to intervene therein.

In particular, three techniques are mainly utilised to limit any leakages: the hydraulic requalification of the plants, the search of any hidden leakages, the control of the piezometric surface.

The control of the piezometric surface enables noticeable savings to be obtained. The volumes lost due to imperfect seal in the components forming the network (the leakages in a water network are mainly due to escapes through the stuffing glands in the gates, the flanged joints and any crackings in the conduits) are practically proportional to the mean value of the pressure in the network. in particular, experimental data shows that the physical losses are proportional to the pressure raised to an exponent 1.15 - 1.18 (Goodwin, SJ (1980) "The result of the experimental programme on leakage control", Technical Report TR 154, Water Res. Centre, Swindon, United Kingdom; NWC (1980) "Leakage Control Policy and Practice", Standing Technical Committee Reports, Number 26, Dept. of the Envir., National Water Council, Britain). During the night hours and, more generally, during all hours of lower consumption, a mean pressure up to 5 - 7 times the useful value for a correct distribution can be observed.

A management strategy has been proposed, therefore, aimed at dissipating the night pressure peaks by utilisation of suitable dissipation members and by controlling the levels reached in the tanks as well as in the pumping stations (NWC, 1980, above quoted work). Assuming that a daily base adjustment of such dissipation members, if properly located, is effected, it is possible to a arrange for the mean pressure values in the network during 24 hours not to be too dispersed around the optimum value, that is to say the minimum pressure value anyway adapted to fulfil the user requirements.

Any water dispersion not only entails superfluous expenses connected with pumping and treating costs, but can also cause untimely investments aimed at utilising new sources and at enlarging the capabilities of the system (hydraulic requalification), in order to keep pace with an increasing demand.

The regularisation of the piezometric surface offers the additional advantage of reducing the wear in the adjustment and junction members of the plants, thereby reducing the possibility of further leakage sources.

The modes for reducing the operation pressure should be suitably studied and depend on the network configuration; therefore, there is the need to study methods to enable a rapid testing of a plant to be carried out and methods adapted to optimise its operation. In particular, since a regularisation of the piezometric surface is to be effected by means of pressure reducing valves, optimisation method are required to enable to determine such an opening grade as to minimise the piezometric height while the instantaneous demand of the users and the service quality are fulfilled.

The regularisation of the piezometric surface can be refined up to making the reduction of the leakages significant only if the operation of the plant can fulfil in real time the user requirements both in ordinary and in emergency conditions.

The various circumstances perturbing the status of the plant and the various characteristics of the status variations caused by such circumstances should be kept into account; for instance, the ageing of the network, the daily variability of the demand and any abrupt decrease of the transportation capability due to accidental events have some consequences on the plant appearing on time scales of years, hours and seconds, respectively. The issue of regulating the piezometric surface is strictly connected to the so-called "pumping schedule" issue, namely the time programming of the water network, and it is to be considered in the frame of the safeguard and protection operations in respect not only of the water resources but also of the energy and economy resources.

In particular, as far as the energy resources are concerned, it should be noted that a larger amount of electric power is generated in thermoelectric plants; this power cannot be stored and consequently it should immediately be utilised, otherwise it is lost. Anyway, the demand of electric power from the users is not constant during the day and it reaches the peak values in the diurnal hours, while the demand is noticeably reduced in the night hours. The thermoelectric stations, however, cannot follow these fluctuations: as a consequence, upon calibrating the generation rate in order to fulfil the maximum demand, a large power excess is reached during the night hours which, if not utilised, is lost. Aiming at encouraging the utilisation of electric power by relevant users during the night hours, the electric power supplier companies usually differentiate the billing rates for the consumed power: a higher cost during the day hours and a lower cost during the night hours.

In order to advantageously exploit the electric power supply during the night hours, it is necessary to have mechanical means of suitable characteristics and tanks of suitable dimensions available. Often this is not possible and it is necessary to carry out even large pumpings during the higher cost diurnal hours. In this case, it is necessary to define the most suitable operation program or "scheduling", namely a behaviour enabling to minimise the absorbed power for supplies during the higher cost hour ranges, while the operation and the hydraulic constraints are respected.

An optimum supervisory and control system implementing an assembly of rules and procedures aimed at minimising the pumping costs can be an effective means to optimise the resources, because an often relevant portion of the operation costs of a water system is connected with the pumping systems.

Optimum management of the system

The management of a complex technologic system is subject-matter of advances studies, because the operation of the system itself depends thereon. Generally, it is the result of the need that different management criteria be contemporaneously respected, these criteria being often in contrast with one another and mutually dependent, so that they cannot be independently respected.

This means that the optimum operation of a single component of the system (for instance the operation rate of a determined mechanical instrument) has a lower relevance with respect to the operation of the whole system.

The need of a comprehensive view point, therefore, influences the operation modes of the individual components thereof. Such influence is determined by the assembly of the objects to be aimed at during the management of the concerned complex technologic system.

For instance, reverting to the particular case of a complex water network, the criteria to be respected in its management (for instance, in the Italian case, refer to Law 5 January 1994, n. 36, that establishes a management agency for each of Optimum Territory Ranges OTR into which the national territory is divided) are as follows:

1) a reasonable use aimed at saving the water resource,
2) protection of waters in respect of contaminations,
3) prevention of the water emergencies,
4) guarantee of minimum service qualities for the users, also including firm management criteria, such as the minimisation of the management costs.

The managing firm of a water system, therefore, is obliged to study the issue of defining the optimum management strategy based upon a multi-criterion selection process for establishing the best possible assembly of control rules.

The selection of an optimum control strategy is further complicated by the objective difficulty to identify the most heavy operation context, namely the sufficiently frequent but simultaneously hostile scenario in which the selection of the rules is to be effected. In fact, the status parameters of a complex system are affected by uncertainties and are consequently variable in the time. It is possible, therefore, that particular and not rare event combinations make the context of other events heavier. Should the selection of the rules be affected by considering mainly the more favourable scenarios, the assembly of selected rules would consequently turn out to be scarcely effective. The design of an optimum management strategy, therefore, should keep not only the various objects to be reached into account, but also the selection of the various contexts within which it should operate and this selection should represent the most severe operation scenarios.

The management directions to be followed in the case of a complex technologic system such as an integrated water network have already been examined.

To obtain such a control level of the plants, belonging to an ATO, as to enable the management agency to fulfil each of the above said management directions, it is unavoidable that the concerned agency be in a condition to modify and consequently to adjust the operation pattern of the plants in order to maintain in the time an optimum efficiency in spite of the dynamism and the variance characterising the concerned ATO.

Digital technology supervisory systems, with hierarchical architecture divided into Supervisory Control and Data Acquisition (SCADA) levels are utilised for controlling the processes in complex industrial systems. The first level controllers allow an automatic adjustment of single plant or a portion thereof, by operating on the field peripherals belonging to it. The higher level controllers provide for supervision of the lower level ones by monitoring the increase in the area levels and consequently the number of involved plants, or the ever increasing number of field peripherals. The last level is designed for supervision of all plants belonging to the whole Optimum Territory Range (ATO).

The supervisory system, therefore, carries out a diagnostic function which enables the operator located at a central station interfaced to the last level supervisor and by means of event and alarm indications to timely become aware of any abnormality not resolved by the control system and also it enables such operator to up-date the control rules in order to reset the optimum configuration of the plants.

When the operation scenario of the concerned plant is varied to so high extent that the assembly of rules implemented by the first level controllers is no more adapted to automatically reconfigure the plants to the maximum possible extent, the operator is in a position to up-date the assembly of rules by changing the reference signals (or "set points"), that is to say the value that the controlled variables should desirably take.

The reconfiguration activity of the set points is completely entrusted to the operator's responsability, who, based upon his experience and possibly utilising decision support instruments as numeric models for checking the concerned plants, establishes the new set point values and checks *a posteriori* the correction effectiveness, by analysing the values taken during the time by the variables monitored by the supervisory system.

Should the set point reconfiguration be not sufficient to allow an effective control of the plants, then it is necessary to provide for a more severe re-design of the control rules, in particular a not in line or "off-line" re-design of the assembly of inferences connecting the status of the controlled variables (typically pressure values, level and flow-rate acquired by the supervisory system) to adjusting the control variables (typically flow interception and adjustment members, such as valves, pumps and overflow members).

The inability for the system to automatically reconfigure the rule assembly limits the efficiency of the supervisory system and makes matching the variable operation context very complex.

Optimum Management Methodologies

The solution of the problem connected with a complex technologic system, such as a pressurised water network, in permanent motion conditions, is very complex, due to the fact that, given the node and delivery point positions, it determines the opening grade of pressure reducing valves.

The involved problem is an optimisation problem and, like any minimum problem, the search of an absolute minimum value, the search of an absolute minimum value is hard.

A large number of optimisation algorithms exist and the ground for such a variety is that establishing an optimisation technique is usually strongly depending on the characteristics of the problem to be faced; this means that there are as many methods as are the classes of problems to be solved.

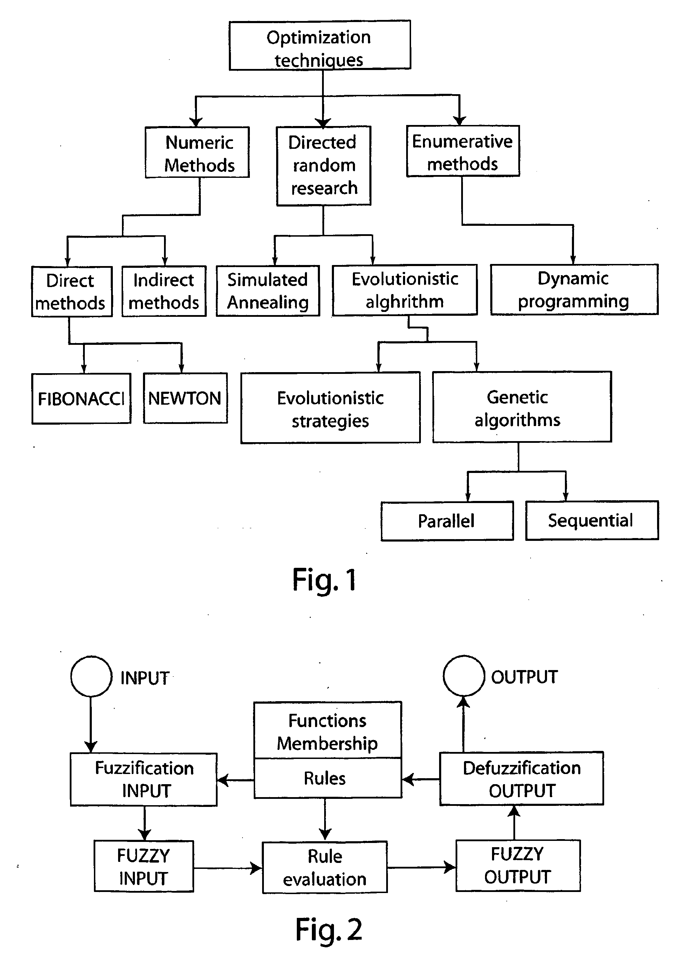

In general, the optimisation algorithms can be classified as: numeric methods, enumeration techniques and "random" search (Figure 1).

All above mentioned methods offer advantages and disadvantages: however, the methods based upon analogies to natural phenomena appear to be more flexible . Therefore, also in view of the strong development of the information media, the search based upon Artificial Intelligence techniques such as Fuzzy Logic (FL) and the Genetic Algorithms (GA) gets a noticeable interest.

The existing management optimisation systems (based upon GA or upon other optimisation algorithms) allow an optimisation of a predictable system/process (for instance an assembly line).

The Genetic Algorithms have already been utilised for a certain time for solving problems connected with water plants: optimisation of the valve allocation, optimisation of the conduct diameters and lastly the optimisation of the pumping hour number (R. Gueli and G. Pezzinga (1998) "Algoritmi genetici per la regolazione di valvole ai fini della riduzione delle perdite", Atti XXVI Conv. di Idraulica e Costruzioni Idrauliche, Catania, Italia).

The generally utilised methodology disclosed in the above quoted studies (but not only those) evidences appreciable results, but it raises two substantial applicability problems:

- utilisation of a specific time variation law in respect of the drinkable water consumptions;
- the explicit determination of the hourly adjustment law of the dissipation valves.

The generally adopted approach to allow to determine the daily hour adjustment law of the dissipation valves is a function of the time expectation of drinkable water consumptions, such expectation being based upon utilisation of a model.

The generally utilised approach, therefore, requires the hourly adjustment law to be recalculated at any significant deviation between the expected drinkable water consumptions and the effectively occurred ones. The operation context of the plants is very variable and consequently the adjustment hourly law is frequently up-dated and this activity, on the other hand, is rather heavy from a computation view point.

More generally, an optimum control system comprises the following sub-systems (Ormsbee, Lansey, 1994):

- a model to simulate the water network,
- a model to forecast the demand,
- an optimum control algorithm.

Also in this case, in addition to the case aiming at minimising the material leakages, the prevailing methodology for determining the optimum scheduling has the above already mentioned drawback, namely the utilisation of hourly laws regulating the variables of interest.

In fact, there are two generally utilised approaches to solve the problem (Jowitt et al. (1988) "Optimal Valve Control in Water Distribution Networks","Journal of Water Resources Planning and Management, ASCE, Vol. 116, No. 4, 455-472; Chase et al. 1989 and Ormsbee et al. 1994) and both approaches consider the determination of the hourly law or the time behaviour of a decision variable as a function of the demand expectation.

For an optimum monitoring, it is of substantial relevance to know the water demand of the system, which, however, is not known a *priori*. Due to this reason, some models for forecasting the demand are established and namely the concentrated model, the proportional model and the distributed model.

It has been observed that an optimum management of a water system requires a comprehensive or holistic approach. In fact, the management criteria we are trying to define have mutual influences. For instance, as above observed, the actions useful to establish the management objects of minimising the losses and the optimum organisation or scheduling influence each other and are also in contrast.

Any plant management policy should keep the above two management criteria into account, by aiming at configuring the adjustment members hour by hour, so as not to excessively favour a management direction with respect to the other.

The model for simulation of the water network is based upon a mathematical model adapted to simulate the distribution system.

A water distribution network can be considered, from a topologic view point, as a graph, that is to say an assembly of elements, each having well defined properties, which meet at certain nodes. The dependent variables are: the flow-rate and the load, in the more general case of variable motion, functions of the space and of the time. The equations characterising the system are the continuity and energy balance equations. In permanent motion conditions, both the continuity equations at the nodes and the energy balance equation at the element are obvious.

In checking a water distribution network operating under pressure in permanent motion conditions, continuity equations in a number equal to the number of nodes as well as energy balance equations in a number equal to the number of elements are available.

The node method offers the advantage, with respect to the conventional methods, that it can be applied both to open networks and to closed networks; furthermore, it is well amenable to be implemented in computerised form.

The problem can be solved by the node method considering the loads at the nodes as unknown variables and establishing a system of n not linear equations, corresponding to the nodes of the network, of the following type

$$K(H).H = C$$

Where $K(H)$, defined as "global matrix", is multiplied by the node load vector $H$ and such product is equal to the supply flow-rate vector at the nodes C.

Based upon these parameters, it is easily possible to calculate the flow-rates and the parameters of interest in any other point of the network.

By negliging, as usual, the load losses located at the nodes, it is possible to consider a single load for each node.

The definition of the topologic properties of a network, upon which the establishment of the continuity equations is based, is obtained by assembling a global matrix starting from elementary matrixes.

The problem is translated into a definition of the elementary matrixes, depending on the type of element to be examined, that relate the flow-rates at the ends of an element and the respective loads to one another.

Fuzzy Logic.

The "fuzzy" control strategy, as proposed the first time by L. Zadeh in 1965, overcomes one of the limits of the conventional control systems, namely the lacking flexibility both in respect of the process to be controlled and in respect of their possibility to integrate knowledges of formal type with other knowledges of heuristic type.

The fuzzy logic appears as a generalisation of the conventional logic which considers partial truth grades and renounces the true-false bivalence as well as the anomalies connected with it and the typical paradoxes of the bivalent logic.

The fuzzy logic is a polyvalent logic based upon an infinite number of values in the range of 0 to 1.

A fuzzy assembly is an assembly of objects having no precise boundary between those belonging to it and those not belonging to it.

Let us assume that $U = \{x\}$ universe of discourse an assembly of elements broadly designated by $x$. A fuzzy assembly $A$ then is an assembly of ordered pairs

$$A = \{x, M_A(x)\}, \ x \in X$$

where $M_A(x)$ is function characterising the fuzzy assembly, namely the function that associates a real number in the range [0,1] to each point of $X$ and where the value of $M_A(x)$ represents the grade of $x$ in $A$ (Zadeh, 1965).

The characteristic function is defined as *membership function $M_A (x)$* and it is such that $0 \leq M_A (x) \leq 1$.

The operations on fuzzy systems are quite analogous as the operations on conventional assemblies and furnish the same results if the membership values are exclusively 0 or 1: therefore, the fuzzy logic includes the conventional logic and constitutes a generalisation thereof.

In general, the inputs of a system are not fuzzy, but they determine numeric values (so-called "crisp") of physical, economic and like parameters such as pressure 2 Pascal, temperature 25 degrees and so on.

The so-called "fuzzification" operation is aimed at translating a numeric value of *x* into a fuzzy assembly. For reasoning in fuzzy terms, it is preliminarily necessary to translate each input numeric value into the corresponding fuzzy assemblies and this operation is called fuzzification. Given a value $x_0$ of the universe of discourse and a fuzzy assembly *A*, the knowledge of such value authorises a truth grade of *A* no higher than $M_A (X_0)$ and it actives, therefore, a subassembly *A'* of *A* having a maximum ordinate $M_A (x_0)$. In general, a numeric value activates various fuzzy systems, if these are overlapping, and the corresponding truth grades are generally different.

The results of the fuzzification allow to activate determined repertory rules: they are those rules whose antecedent is a combination of the previously obtained input fuzzy assemblies.

An activation grade is indicated for each rule characterised by an antecedent and a consequent.

The minimum truth grade of the antecedent fuzzy assemblies is generally considered as the activation grade of a rule. The activation of a single rule creates by inference one or more output fuzzy assemblies.

It is now to be observed that in the previous inference stage an output assembly type can be inferred a number of times based upon different rules, generally with different grades. In these cases the assembly having the higher truth grade is always selected, discarding the other or the others.

In any case, there will be remaining output fuzzy assemblies of any type and it will be necessary to combine these different assemblies into a single fuzzy assembly by means of a "combination" operation.

Generally it is not sufficient to obtain a single output fuzzy assembly as a final result and it will be necessary to determine suitable numeric values (crisp). The operation by which these numeric values are furnished is defined as "defuzzification". It consists in ascertaining the most representative numeric value of the final assembly O.

In general, a "fuzzy" system is a system comprising input membership functions, fuzzy rules and output membership functions.

The characteristic functions performed by any fuzzy system are input fuzzification, fuzzy inference, composition of the fuzzy outputs and defuzzification.

The architecture of a fuzzy system is shown in Figure 2.

At this point, one of the limits of the ordinary control systems, such as the so-called standard controllers of the Proportional - Integrative - Derivative (PID) Action type, is just the lacking flexibility both in respect of what they have to control and in respect of the possibility to integrate knowledges of the formal type with other knowledges of heuristic type those skilled in the art have matured from their practical experience with the plant.

The fuzzy controller is particularly versatile in all those cases in which the knowledges of a skilled person can be implemented, as in the case of the water network.

The core of a fuzzy controller includes the formalisation and the characterisation of the rules by which it is described.

In general, to improve the performances of a controlled system, a noticeable refining effort of the fuzzy rules is needed. Since no analytical relationship exists between the desired performances and the structure of the fuzzy controller, the calibration of the fuzzy controller can be effected based upon heuristic approaches or on numeric optimisation approaches.

Genetic Algorithms

Many searches in the Fifthies and Sixthies of the 20th century have developed optimisation and automatic learning algorithms based upon evolution concepts.

The Genetic Algorithms (GA) were invented and developed by John Holland in order to study the adaptation phenomenon as it occurs in nature and to transfer the natural adaptation techniques into the information systems.

In recent years the GA's have been confirmed as a valid procedure for global optimisation applied to many informatics, engineering, medicine and biology sectors.

Figure 1 illustrates the point in which the Genetic Algorithms are located among the various optimisation techniques.

At this point, it is necessary to introduce the correlation between the biologic terms and the terms which will be employed to describe the GA's.

All living organisms are comprised of cells containing DNA strands called chromosomes. Each chromosome can be ideally divided into genes, each of which codes a particular characteristic. The possible configurations of a characteristic are alleles. Each gene is located at a position defined as locus.

Many organisms, such as the human cells, have different chromosomes in any individual cell. The assembly of these chromosomes is defined as genoma, the assembly of the genes included in a genoma is called genotype which subsequently translates into the phenotype of the organism, that is to say his physic and mental characteristics.

The fitness of an individual is the likelihood he has to survive to sufficient extent to be capable of reproduction.

In Genetic Algorithms a strict correspondence exists with biologic terms. The chromosomes are bit strings: they represent a possible solution to the problem; the genes can be represented by single bits or by block of bits coding an element of the candidate solution. An allele takes a value 0 or 1 for problems with binary codification; it can take a number of values when a larger alphabet is utilised.

Each allele is located at a well determined position (locus). The crossing or crossover consists of the gene exchange between two chromosomes, while a mutation is represented by a random exchange of genes in the chromosome.

In nature, the combination of ancestors having good characteristics can result into very good descendants, whose quality is better than that of each ancestor. In this way the species evolve and become even more adapted to their environment. The GA's operate in direct analogy to the nature behaviour. They operate with a population of individuals, each of which represents a possible solution to the assigned problem. An adaptation score or "fitness score" is associated to each individual according to how good the solution to the problem is. In nature, the fitness value establishes to which extent an individual can compete for resources. The better individuals have the possibility to reproduce by cross-breeding with other individuals of the population.

The less adapted or less fitting individuals have less likelihood to reproduce and consequently they estinguish. A whole new population of possible solutions is therefore generated by the selection of the best individuals of the current generation which by mutual cross-breeding generate a new assembly of individuals. This new generation comprises, in general, individuals having better characteristics than those of the good individuals of the preceding generation. In this way, after many generations, such good characteristics are propagated to the whole population, since they are mixed and exchanged with other good characteristics, by encouraging the cross-breeding among more adapted individuals, the most promising areas of the research space are explored.

Assuming that the GA is well constructed, the population converges to an optimum solution of the problem. The structure of the genetic algorithms has characteristics that make them, in some applications, the sole valid alternative with respect to the conventional optimisation methods, in that:

- they do not process a single point of the domain of interest, but they simultaneously process a "population" of points, thereby reducing the likelihood to be trapped in local minima;
- during their execution, they utilise probabilistic and not deterministic transition rules, as it occurs in connection with the conventional optimisation methods;
- they need, for determination of the optimum solution, only the knowledge of the objective function; this is the characteristic that makes the algorithms more effective and alternative with respect to the conventional optimisation techniques.

A GA, differently from the conventional methods, processes an assembly of points representing the individuals of the population, rather than a single value. The parallel process is such that the characteristic information of each of them can be transmitted and combined with the other's one.

It is assumed that a possible solution for a problem can be represented as a set of parameters, called genes, which are connected together in order to form a string of values called chromosoma. Holland firstly demonstrated, and it is still accepted by many people, that the ideal solution is to utilise a binary alphabet to represent a string. In genetic terms, the assembly of the parameters represented by a particular chromosome is called genotype. The genotype includes all requested information to construct an organism that is called phenotype. The same terms are utilised in GA's. The fitness function of an individual depends on the performances of the phenotype. This can be derived from the genotype, namely it can be calculated from the chromosoma, by applying the fitness function.

Therefore, when a binary alphabet is utilised, the chromosoma includes only 0 and 1 values and if we consider the chromosoma

$$A = a_j\, a_{j-1}\, .\, ..\, a_2\, a_1$$

its decoding will furnish

$$x = \Sigma\, a_i\, 2^{i-1}$$

For each problem to be solved, a specific fitness function should be constructed. Given a particular chromosoma, the fitness function returns a single "fitness" numeric value or a "merit figure" which is assumed as proportional to utility or ability of the individual represented by the concerned chromosoma. Fitness of a string is strictly connected to the value taken by the function to be optimised at that particular point; the higher the fitness value of a point, the closer such point, belonging to the domain of the function to be optimised, will be to the global optimum point.

The fitness value, therefore, will be determined to identify those element of the considered population which result to be more promising, that is to say those elements that in evolutionistic sense, are more adapted and therefore have a higher likelihood to transmit, on reproducing, their genetic patrimony to the subsequent generations.

The determination of the fitness function is subjective and clearly connected to the application under consideration. In many case, it is selected to minimise the error between the system output and the desired output, but it is anyway possible to consider performance figures that keep other factors, such as energy consumed for control and economic aspects, into account.

The algorithm starts by generating, at the zero step, a population of individuals in random manner. Each individual is then assigned his own "fitness". The subsequent generation is obtained by applying to the previous one the following genetic operators simulating the reproduction mechanism: clonation, crossover and mutation.

The application of the operators takes place with a stochastic procedure, based upon which an activation likelihood is assigned to each of the three operators, respectively, $p_r$, $p_c$, $p_m$, constant in the whole optimisation process.

Each time a well adapted element is selected according to the fitness value, a decision as to which operator should be applied thereto is to be taken.

Then, a random number $p$ in the range of 0 to 1 is generated, if $p_r < p$, then the element under consideration will be selected for being included in the new generation. If, instead, $p_r > p$, then the concerned element will be discarded and it will not be included in the new generation being created.

The procedure is completely similar for crossover and permutation operators; it should be underlined that, in connection with crossover, it is necessary to select two strings rather than a single one. The application to the management of complex technologic systems, therefore, provides for starting from a certain number of strategies, evaluating them one by one in a long time and ascertaining the winning strategy by means of GA techniques.

A relevant characteristic of this method is the adaptability, which makes it capable to flexibly accommodate complex situations and, should any problem be raised, the performance of the model is progressively degraded rather than completely and abruptly "collapsing".

Furthermore, a noticeable tolerance is gained in respect of failures and malfunctions as well as the capability to identify in short time heuristic solutions very close to the optimum ones in optimisation applications or in solution of problems of combinatory type.

Soft Computing

Recent developments in fuzzy logic theory, in neuronal networks and in genetic algorithms, on one hand, and in digital signal processor technology, on the other hand, have allowed the practical application of a new development methodology, soft computing, in many respects revolutionary with respect to the conventional methodologies, particularly in the field of the artificial intelligence and of the advanced controls.

Soft computing is a new scientific doctrine born from concurrence of three basic doctrines studied since many years (neuronal networks, fuzzy logic and genetic algorithms), that only in recent times have got a practical significance in industrial field, in view of the development of microelectronics aimed at supporting the computational specificity of this methodology on one hand and the availability of development environments adapted to modelise an application and to generate the code for the final object.

Soft computing offers the methodologic integration of one or more of the above mentioned three basic doctrines, taking the best potion from each of them:

- the capability to modelise, to control uncertain and complex systems and to synthetically represent the typical knowledge of the fuzzy logic;
- the capability to learn very complex functional relationships from the neuronal networks; and
- the optimisation capability based upon the mutation and selection laws from the genetic algorithms.

The need to utilise a combination of the above mentioned methodologies is real. In fact, in applications involving a fuzzy controller, reference has generally always been made to the capability of a skilled person to describe the membership functions and the assembly of rules characterising the system, such skilled person being able to translate the operations to be performed in the system into linguistic form.

It is to be noted, however, that a skilled person is not always available to describe the functionalities of the system and, on the contrary, in a larger proportion of the various cases, the rule assembly is ascertained by trials and the system in its whole is not optimised.

The presently existing management optimisation systems (based upon GA or upon other optimisation algorithms) allow to optimise a predictable system / process (for instance, an assembly line). Their applicability is hard, unless they are utilised as a help in carrying out feasibility studies, in unpredictable event-driven industrial systems.

For instance, in a water network system, the time trend of the flow-rate demanded by the users has a high uncertainty grade (like the meteoric adductions for a municipal drainage system). It happens that the service is furnished for long periods even if the pumps are out of order, the valves are blocked and like and even if the maintenance personnel is not aware of the problem or is able to solve it in rapid times.

Without recourse to these extreme cases, it should be noted that the life expectance of the conduits and the mechanisms varies during the time (both in continuous way, such as ageing of the conduits, and in discontinuous way, as in failure occurrences) and it is not possible to know, but in approximated terms, the status and the evolution thereof.

It is an object of this invention to suggest an automatic management method for a complex technologic system adapted to respond to unforecast variations in the status of the controlled system, while fulfilling the physic constraints and the management strategy. In particular, in connection with water networks, the optimisation of the operative strategy relates to achievement of any management criterion adapted to allow to save the water and power resource and to maximise the service qualitative standards, in particular:

- the reduction of the material losses and consequently a saving of the water resource,
- an energy or power saving aimed at promoting the utilisation of drinkable water volumes matching the water constraints, the quality of the delivered waters and the operation limitations.

This invention is aimed at keeping any uncertain even complex parameters (failures, fire-fighting requests, operation errors) into account, at overcoming the difficulties encountered in these cases even by exploitation of a more conventional approach or a probabilistic approach in which the uncertain parameters are independent random variables, the likelihood distribution function of which is to be assumed. The probabilistic methods are adapted, even if the numeric treatment turns out to be anyway difficult, to handle any uncertainties relating to independent variables such as those caused by measurement errors (residual chlorine, pressure, flow-rate) and are not adapted to handle any uncertainties of topologic and management type, in respect of which a probabilistic method appears to be too complex and expensive.

The invention is defined by independent method claim 1 and by apparatus claim 20.

The invention concerns an automatic method for determining an optimum management criterion for controlling an industrial system, comprising one or more operable control members, each of which takes a state described by at least one corresponding control variable, the assembly of the states taken by said members defining a configuration of the industrial system, the industrial system taking an operation state defined by one or more physical parameters, each described by at least one controlled variable, the industrial system operating in an operative context defined by the operative state of the system and/or by the operative availability of one or more of said members and/or by one or more conditioning parameters external to the system, the configuration of the industrial system being adapted to be modified as a function of the operative context according to a management criterion comprising one or more "fuzzy" rules, as described by an association table between control variables and controlled variables, the modification of the industrial system taking automatically place by means of an attribution of a fuzzy assembly to each controlled variable in the table of the fuzzy rules, the application of the association table of the fuzzy rules and the attribution of a determined numeric value to the fuzzy assembly of each control variable resulting from said application, the method being characterised in that it comprises the following steps:

A. defining N management criteria, where $N \geq 1$;

B. generating a population of $M$ agents, where $M \geq 1$, each of which represents an operative context;

C. for each of said $N$ management criteria defined in step A., generating a corresponding population of $Q_i$ agents, where $i = 0,1,....(N-1)$ and where $Q_i \geq 1$, each agent being representative of an assembly of one or more fuzzy rules;

D. performing a multi-species ecosystem selection and evolution iterative genetic algorithm, the ecosystem including said population of $M$ operative context agents and said $N$ populations of $Q_i$ fuzzy rule assembly agents, so that

- in each population of fuzzy rules assemblies corresponding to a management criterion, to let those agents of fuzzy rule assemblies better responding to said one or more management criteria defined in step A to reproduce, according to a suitability grade, in respect of at least an operative context agent, as attributed to each agent of one or more fuzzy rule assemblies, and
- in the population of operative contexts, to let the most hostile operative contexts to reproduce, according to a hostility grade attributed to each operative context agent generated in step B; and

E. at the end of the multi-species ecosystem evolution, selecting the assembly of one or more fuzzy rules represented by the most suitable agent of one or more fuzzy rule assemblies according to said suitability grade.

In particular, it should be noted that a particular rule assembly will utilise in fact a precise strategy to respond to a management criterion. The strategy represented by the rule assembly will be centred, for instance, upon an adjustment member group in order to reach a management criterion. An alternative strategy could be centred upon other adjustment members to achieve the proposed object. It is apparent that unforeseen events, such as the breakage of a particular member, will have different efficiencies if applied to different rule assemblies. The selection of the most unfavourable context appears to be then unavoidably connected to the selection process of the rule assembly and it cannot be usefully determined a *priori*. The ecosystem allows the concurrent evolution of the multi-species rule assembly population and of the operative context population, in similar way as in the host-guest model.

The method according to this invention determines the reconfiguration mode of the plant based upon the variation of the current values of the controlled variables. This object is achieved when the rule assembly is defined to link the fuzzy assemblies referred to the controlled variables with the fuzzy assemblies referred to the control variables, namely when the best association table between potential control and controlled variable has been defined.

Preferably, according to this invention, said step B randomly generates said population of $M$ operative context representing agents.

Still preferably, according to this invention, said step C randomly generates said $N$ populations of $Q_i$ fuzzy rule assembly representing agents.

Still according to this invention, the condition $Q_i \leq M$ can be fulfilled.

Further according to this invention, said step D comprises the following sub-steps:

D.1.- distributing said population of $M$ operative context agents and said n populations of $Q_i$ fuzzy rule assembly agents in a toroidal two-dimensional representation grid having a number of cells equal to $M$, so that each cell of the grid comprises:

- one agent of the operative context population, and
- one agent of one or more of the $N$ populations of fuzzy rule assemblies relating to a corresponding management criterion;

D.2.- for each cell of the grid,
D.2.1.- simulating the operation of the industrial system in the operative context represented by the related agent belonging to the cell by modifying the configuration of the system according to the combination of all of the fuzzy rule assemblies represented by the related agents belonging to the cell,
D.2.2.- attributing a suitability grade $\varphi_i$ to each one or more fuzzy rule assembly agent belonging to the cell, where the suitability grade $\varphi_i$ has an intermediate value between a maximum numeric value X, equal to the best suitability grade, and a minimum numeric value Y, equal to the worst suitability grade,
D.2.3.- attributing a hostility grade $\rho_c$ to the operative context agent belonging to the cell equal to

$$\rho_c = (X - \varphi_c)$$

where $\varphi_c$ is a cumulative suitability grade of said $N$ fuzzy rule assembly agents belonging to the cell, as a function of the suitability grades $\varphi_i$ of the individual fuzzy rule assembly agents belonging to the cell, equal to

$$\varphi_c = F(\varphi_0, \varphi_1, \dots \varphi_{N-1}) \; ;$$

D.3.- checking the stopping condition of the iterative genetic algorithm, furnished by the convergence of the best value of the cumulative suitability grades $\varphi_c$ of all of the cells of the grid,
D.4.- if the result of the check of sub-step D.3. is negative, or the iterative genetic algorithm has not yet reached the stopping condition,
D.4.1.- marking each cell of the grid as available to being selected in the subsequent sub-step,
D.4.2. randomly selecting a first cell of the grid among the available ones and marking it as unavailable,
D.4.3.- defining an influence area of the first cell, as selected in sub-step D.4.2., comprising a number w of cells,
D.4.4.- randomly selecting $m$ cells among said $w$ cells of the influence area defined in sub-step D.4.3., where $m \leq w$,
D.4.5.- randomly selecting a second cell among the $m$ cells selected in sub-step D.4.4., each of said $m$ cells having a selection likelihood proportional to the respective cumulative suitability grade $\varphi_C$,

D.4.6.- for each of said $N$ management criteria, applying at least one coupling or crossover genetic operator to a pair of fuzzy rule assembly agents, one of which belongs to the first cell selected in sub-step D.4.2. and the other one belongs to the second cell selected in sub-step D.4.5., the agents of said pair being part of fuzzy rule assembly population relating to the considered management criterion, in order to obtain a pair of son agents belonging to the same population of the agent pair that generated them,

D.4.7.- randomly selecting two further cells among the $(m + 1)$ cells of the group comprising the first cell selected in sub-step D.4.2. and the m cells selected in sub-step D.4.4., each of said $(m + 1)$ cells having a selection likelihood inversely proportional to the related cumulative suitability grade $\varphi_C$,

D.4.8.- replacing all of the one or more fuzzy rule assembly agents belonging to said two further cells selected in sub-step D.4.7., in such a way that, for each of said n management criteria, the pair of fuzzy rule assembly agents belonging to the population related to the considered management criterion is replaced by the pair of son agents generated in sub-step D.4.6. belonging to the same population,

D.4.9.- randomly selecting a third cell among the m cells selected in sub-step D.4.4., each of said m cells having a selection likelihood proportional to the respective hostility grade $\rho_C$ of the operative context agent belonging to the cell,

D.4.10.- applying at least one coupling or crossover genetic operator to a pair of operative context agents, one of which belongs to the first cell selected in sub-step D.4.2. and the other belongs to the third cell selected in sub-step D.4.9., in order to obtain a pair of operative context son agents,

D.4.11.- randomly selecting two additional cells among the $(m + 1)$ cells of the group comprising the first cell selected in sub-step D.4.2. and the $m$ cells selected in sub-step D.4.4., each of said $(m + 1)$ cells having a selection likelihood inversely proportional to the respective hostility grade $\rho_C$ of the operative context agent belonging to the cell,

D.4.12.- replacing the pair of operative context agents belonging to the two additional cells selected in sub-step D.4.11. with the pair of operative context son agents generated in sub-step D.4.10,

D.4.13.- if the preceding sub-steps D.4.2. to D.4.12. have been iterated for number of iterations lower than a pre-established number $R$, with $R \leq M$, repeating the previously listed sub-steps starting from sub-step D.4.2.,

D.4.14.- if the preceding sub-steps D.4.2. to D.4.12. instead have been iterated for number of iterations equal to $R$, applying at least a mutation genetic operator to each operative context and to each one or more fuzzy rule assembly agent belonging to all of the cells of the grid,

D.4.15.- repeating all of the previously listed sub-steps starting from sub-step D.2.,

D.5.- if the result of the check in sub-step D.3. is negative, or the iterative genetic algorithm has reached the stopping condition, furnishing as optimum management criterion for controlling the complex industrial system the assembly of one or more fuzzy rules represented by the agent having the best suitability grade $\varphi_i$ among the agents belonging to the cell having the best cumulative suitability grade $\varphi_C$.

In this way, each new generation of fuzzy rule agents prevailingly replaces scarcely adapted agents of the current generation. The reproduction mechanism then is such that the best fuzzy rule agents of the current generation are maintained in the subsequent generation. The adopted model consequently is an elective model and this condition is sufficient to assure the convergence of the evolution model to the optimum value of the proposed problem. Similarly, the reproduction model of the population of operative context agents is such that the best and therefore the most hostile agents of the current generation are maintained in the subsequent generation. Consequently, also in this case, the adopted model is an elective model and this condition is sufficient to assure the convergence of the evolution model to the optimum value of the proposed problem.

Preferably, according to this invention, said step D.1. distributes said $N$ populations of $Q_i$ fuzzy rule assembly agents in such a way that each cell of the grid comprises one agent of each of said $N$ populations of fuzzy rule assemblies relating to a corresponding management criterion.

Further according to this invention, at least one operative context agent can represent an operative context comprising the effect of one or more accidental events, each of which has a pre-defined occurrence likelihood, in order that the composite occurrence likelihood of the accidental events relating to said operative context is higher than a pre-established minimum threshold value, the genetic operators applied to said at least one operative context agent, which generate at least one resulting operative context agent, being such as to maintain in said at least one resulting operative context agent said composite occurrence likelihood of said starting operative context agent. In other words, the operative context is formed by a base represented by a model of industrial system into which some variants have been randomly introduced. Each variant is represented by an agent (one for each cell of the toroidal grid) representing the operative context the rules coded in the same cell are to be tested. Each variant to the basic operative context is obtained by selecting some accidental events retrieved from a collection of random events which make the context hostile to the operative management. Each event has an associated occurrence likelihood, as determined based upon the experience or upon the event occurrence frequency. For each agent scenario to be defined, it is necessary to select a variable number of possible occurrences, or of variants, from a collection of them. The sole constraint to the number of selected occurrences is that the cumulative likelihood of all of the selected occurrences is higher than a pre-established likelihood. In this way, the contemporaneous occurrence frequency of all of the events represented by an agent is always higher than a pre-established value, thereby preventing the management rules from being trained and selected in excessively rare contexts. The code of each agent will be the usual one, namely tables or arrays, and the genetic operators operating on these individuals will be usual. The sole measure is that the concerned operators should be conservative in respect of the cumulative occurrence likelihood associated to each agent, namely the genetic combinations should not be such as to allow the son individuals to have an occurrence frequency lower than the pre-established value and then to be rarer. This is obviously achieved by randomly selecting and eliminating a number of occurrences useful to restore the condition.

Still according to this invention, the cumulative or composite occurrence likelihood of the accidental events relating to said at least one operative context agent can be lower than a pre-established maximum threshold value.

Preferably, according to this invention, the maximum numeric value $X$ of the suitability grade $\varphi_i$ is equal to 1.0 and the minimum numeric value $Y$ of the suitability grade $\varphi_i$ is equal to 0.0.

Again according to this invention, the cumulative suitability grade $\varphi_c$ of said $N$ one or more fuzzy rule assembly agents belonging to a single cell of the grid is equal to the minimum suitability grade $\varphi_i$ of the individual one or more fuzzy rule assembly agents belonging to said cell, namely

$$\varphi_c = min \ \{\varphi_0, \ \varphi_1, \ ..., \ \varphi_{N-1} \ \}.$$

Further according to this invention, in step D.4.2., the first cell can be randomly selected among the available cells of the grid in equi-likelihood manner.

Still according to this invention, all of the $N$ populations of fuzzy rule assembly representing agents include the same number of agents, namely $Q_i = Q$, where i = 0, 1, ..., (N-1), preferably $Q_i = Q = M$, where $i$ = 0,1,...,(N-1).

Preferably, according to this invention, the industrial system is a water system for management and control of a water service, comprising the collection and/or the supply and/or the treatment and/or the distribution of drinkable water volumes and/or the removal and/or the treatment of the wastes and/or the return of the wastes to the collection mass, said water system comprising a water network of conduits and/or tanks, the operative control members of said water system comprising check and/or adjustment valves and/or pumps and/or pumping plants and/or check and/or adjustment members, the control variables defining the state of a corresponding operative control member comprising the pumping flow-rate of a pump and/or the adjustment grade of a valve, the physic parameters defining the operation state of the water system comprising the flow-rate in one or more conduits and/or the pressure of the fluid at one or more points and/or the concentration of contaminants in the fluid and/or the fluid level in one or more tanks and/or the flow-rate pumped by one or more pumping plants and/or the piezometric surface of the fluid at one or more points, the availability to operation of one or more of said members comprising the definition of the failure state of the concerned members, the conditioning parameters external to the system comprising the hourly law of the meteoric flows and/or the hourly energy billing rate and/or the hourly law of the drinkable water demands and/or the abrupt increases in the drinkable water volume demands and/or exceptional meteoric flows. In particular, the operative context comprises the definition of the hourly law of the variables characterising the complex system, in the case of ATO, examples are the hourly law of the meteoric adductions and the hourly law of the drinkable water volume demands. The hourly law of the variables of interest should cover a significant time interval for the selection of the management rules, for instance a week or a month. The efficiency of a control rule system depends, besides the hourly law of the variables characterising the system to be controlled, also on random events, whose occurrence likelihood is assumed as known. Such unforeseen events can make the operative context particularly unfavourable. Examples of events to be considered, in the case of plants for management of the water integrated cycle, are as follows: the failure of the pumps, the breakage of the conduits, the failure of interception and adjustment members, abrupt increases in the demand, for instance for fulfilling the demand of fire fighting water volumes and exceptional meteoric adductions. The determination of the best reference operative context, for the optimum rule assembly selection process, means the determination of the hourly laws of each variable of the system to be controlled, a rather simple operation, and the definition of the combination of unforeseen events, among all possible combinations, that is sufficiently frequent and that is particularly hostile.

Still according to this invention, when the industrial system is a water system, said $N$ management criteria defined in step A can comprise the energy saving and/or the minimisation of the material losses and/or the water resource saving and/or the fulfilment of the hydraulic constraints and/or the fulfilment of the quality parameters of the drinkable water volumes and/or the fulfilment of the minimum levels of quality figure of the service. In this way, the invention enables a control of the water plants aiming at achieving the concurrent and/or cooperating management objects, such as, for instance: the energy saving, the preservation of the water resource, the fulfilment of the constraints relating to the quality parameters of the delivered water ( to the users and to the receptor body) and the fulfilment of the minimum quality levels of the service. More specifically, the management criteria to be achieved are preferably the minimisation of the material losses and the reduction of the energy costs for pumping.

It is further specific subject-matter of this invention an automatic method for management and control according to a dynamically up-dated optimum management criterion for an industrial system, comprising one or more operable control members, each of which takes a state described by at least one corresponding control variable, the assembly of the states taken by said members defining a configuration of the industrial system, the industrial system taking an operation state defined by one or more physical parameters, each described by at least one correspondent controlled variable, the industrial system operating in an operative context defined by the operative state of the system and/or by the operative availability of one or more of said members and/or by one or more conditioning parameters external to the system, the configuration of the industrial system being adapted to be modified as a function of the operative context according to a actual management criterion comprising one or more "fuzzy" rules, as described by an association table between control variables and controlled variables, the method being characterised in that it comprises the following steps:

F.- monitoring the operative context in which the concerned system operates until a variation of this operative context is detected;

G.- checking whether the current management criterion is adapted to manage the variations of the operative context, by modifying the configuration of the industrial system in order to satisfy the current management criterion;

H.- if the result of the check step G. is negative,

H.1.- determining a new current management criterion by means of the optimum control management criterion as previously described,

H.2.- checking whether the new current management criterion as determined in step H.1. is adapted to manage the variation of the operative context, by means of a simulation of the variation of the industrial system configuration, as a function of the varied operative context , according to the new current management criterion and, if the result of the check is negative, reverting to previous step H.1.;

I.- modifying the configuration of the industrial system in order to satisfy the current management criterion;

J.- repeating the previously listed steps starting from step F.

Still according to this invention, subsequent to step F. and prior to step G., the following step is carried out:

K.- selecting, from a data bank containing a number O of predetermined management criteria, all of the contained management criteria and marking them as available;

and, during step H., prior to step H.1., the following additional steps are carried out:

H.3.- checking for the existence of at least one available management criterion in said data bank of predetermined management criteria;

H.4.- if the result of the check in step H.3. is negative, performing step H.1.;

H.5.- if the result of the check in step H.3. is positive, selecting one of the available management criteria in said data bank of predetermined management criteria, adopting it as current management criterion, marking it ad unavailable and reverting to step G.

Preferably, according to this invention, said steps F, G, I and J are carried out by a Supervisory Control And Data Acquisition (SCADA) system of the digital technology and level hierarchical architecture.

Again according to this invention, said step G. for checking that the current management criterion is adapted to manage the variation of the operative context can comprise an analysis of the time behaviour of at least an efficiency figure of the industrial system, furnished by a virtual sensor (for instance a loss figure). In other words, during the check step G, said SCADA system captures an eventually detected anomaly; in particular, the information relating to such anomaly can be transmitted to an operator.

It is a further specific subject-matter of this invention an electronic system characterised in that it is adapted to carry out the automatic method for determining an optimum management criterion for controlling an industrial system as previously illustrated.

It is also specific subject-matter of this invention a computer program characterised in that it comprises code means adapted to execute, when running on a computer, the automatic method for determining an optimum management criterion for controlling an industrial system as previously illustrated.

It is also an object of this invention a memory medium having a program stored therein characterised in that the program is the computer program as above described.

It is a further object of this invention an automatic system for management and control of an industrial system, characterised in that it is adapted to execute the automatic management and control method, according to a dynamically up-dated optimum management criterion, of an industrial system as above illustrated.

The invention will be now described bay way of illustration, not by way of limitation, with particular reference to the attached drawings.

Figure 1 illustrates the family of existing optimisation techniques;

Figure 2 illustrates the typical architecture of a fuzzy system;

Figure 3 shows a block diagram of a simulator for a fuzzy controller;

Figure 4 shows a block diagram of a control system for a real water network;

Figure 5 shows a block diagram of the system for ascertaining and implementing the optimum management of a complex technologic system according to this invention;

Figure 6 shows the flow chart of the method for selecting the optimum strategy according to this invention;

Figure 7 shows the toroidal representation of the ecosystem model;

Figure 8 illustrates the overlap of the membership function adapted for fuzzification in connection with the flow-rate and pressure variables at a point of the water network;

Figure 9 shows the behaviour of the cost function as the generation number of subsequent populations increases;

Figure 10 illustrates a behaviour example of the number of unacceptable strategies as subsequent generations of 50 individuals increase;

Figure 11 illustrates a further behaviour example of the number of unacceptable strategies as subsequent generations of 50 individuals increase;

Figure 12 illustrates a further behaviour example of the number of unacceptable strategies as subsequent generations of 50 individuals increase;

Figure 13 shows the behaviour of the cost function as a function of the generation (50 individuals);

Figure 14 where the selected probabilities are $p_c$= 0.8 and $p_M$ = 0.1;

Figure 15 illustrates the behaviour of the pressures in a node at a head point of the network, according to an application example of this invention;

Figure 16 illustrates the behaviour of the loss ratio $R_p$ during the 24 hour time span.

The same reference numerals will be used in the following description to designate the same items in the Figures.

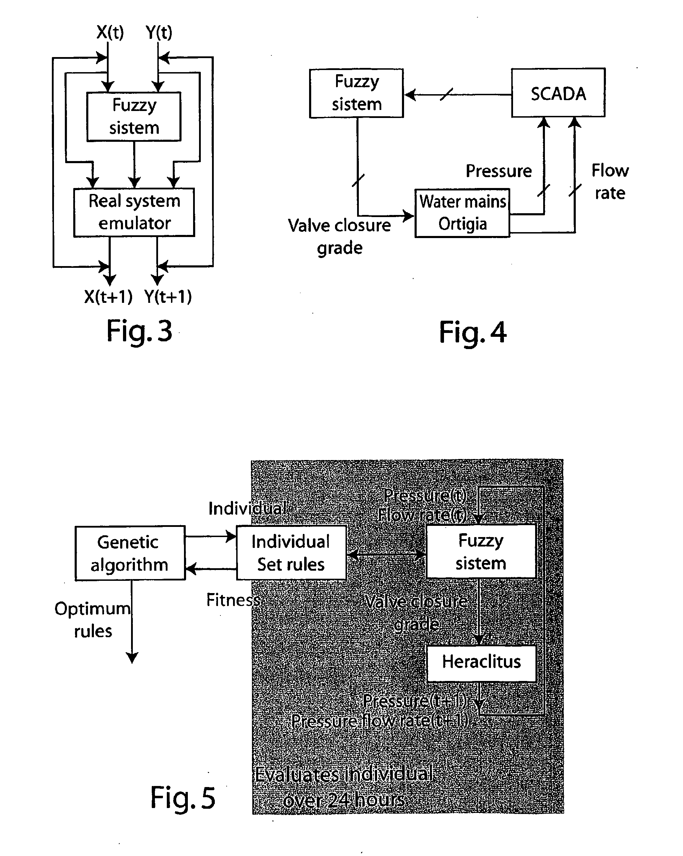

In particular, by referring to Figure 3, it can be observed that a fuzzy system can be serially combined with an emulator of the real technologic system, in order to ascertain that the (pre)determined fuzzy rules are effectively adapted to eliminate a detected anomaly.

For applying the so ascertained strategy, the control of the real technologic system is then considered, as it is shown in the embodiment of Figure 4, in this case a real water network. The SCADA system detects and controls the variables of the concerned technologic system, in compliance with the implementing rules suggested by the fuzzy system, in which the simulator according to the diagram of Figure 2 can be included.

The method according to this invention is illustrated in Figure 5, where "Eraclito" designates a particular SCADA simulator and controller of the real complex technologic system.

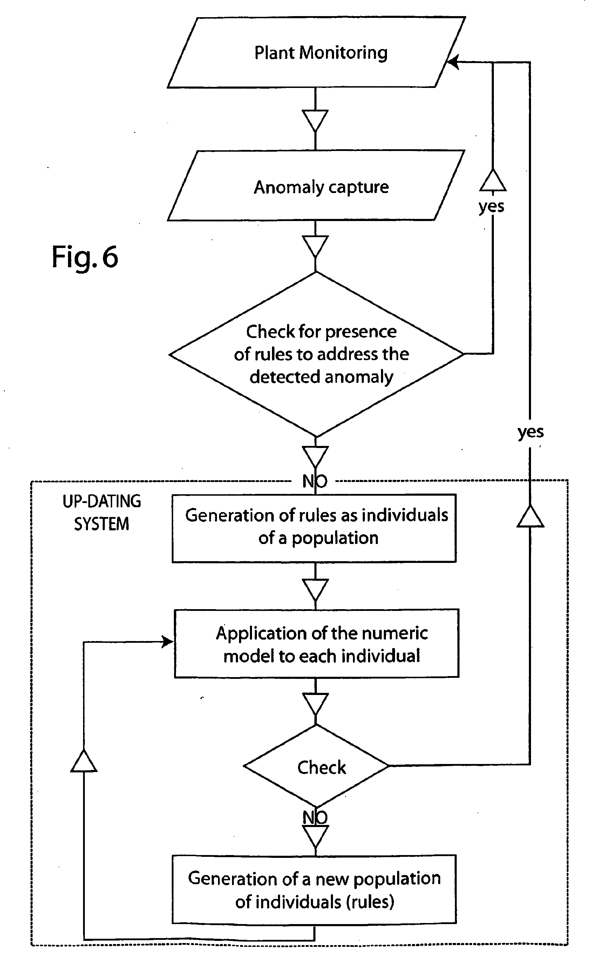

The flow chard of Figure 6 specifies the implementation order of the step in the method according to this invention. An anomaly is detected by continuously monitoring the plant . It is ascertained, therefore, whether said anomaly can be solved by means of the rules already included in the database of the system. In the positive, the monitoring and controlling system provides for applying them. Should no rule be included to solve the problem, a further rule is searched by utilisation of genetic algorithms. New rules are generated and processed as individuals of a rule population on which the standard operators of Genetic Algorithms operate. Then it is checked whether a solution has been found to said anomaly by application of the numeric model of the technologic system according to the so generated rules. The generation step is repeated until a solving rule is found.

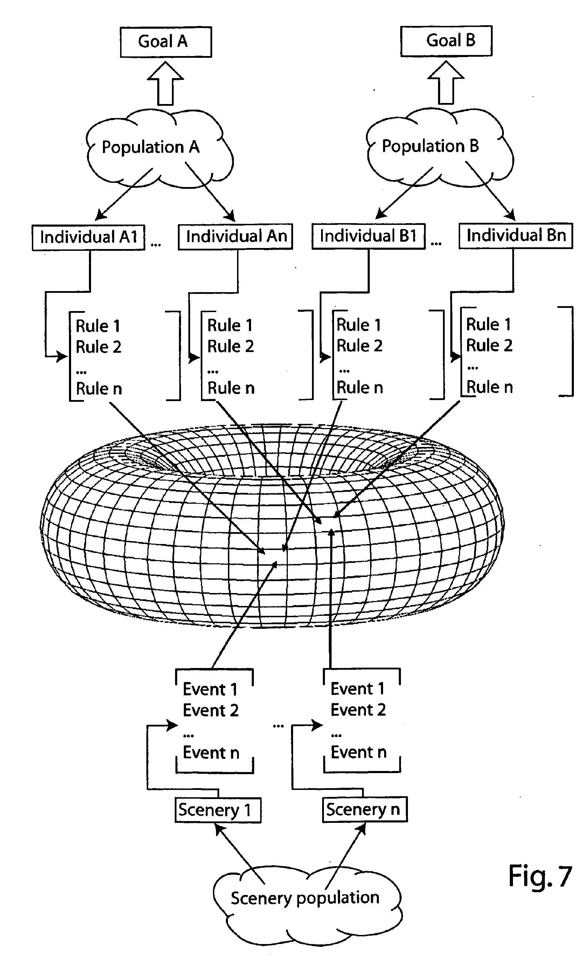

Figure 7 illustrates a toroidal representation as utilised by the method according to this invention.

To implement the method and the system according to this invention, it is necessary to define the rule set connecting the fuzzy assemblies related to the controlled variables with the fuzzy assemblies related to the control variables.

The controlled variables of the plant are for instance flow-rate measurements in some sections, pressure measurements, contaminant concentration measurements, level measurements, and like; in addition to the above mentioned, state variables can be considered which allow to better define the operation context of the plants, even if they are not really controlled variables: an example is the knowledge of the billing active range for the energy consumed for pumping.

The reconfiguration of the water system based upon the present values of the controlled variables is determined by the SCADA system by which the fuzzy control system is implemented. An example of the operation mechanism is illustrated hereinbelow: the definition of the controlled variables is shown in Table 1.

For the control of the water system, different sections of interest are defined in respect of the parameters defined in Table 1: a measurement device for the relative parameter performing the continuous detections acquired by the SCADA system is arranged in each section.

Table 1: Definition of the Controlled Variables

|  | Description |
|---|---|
| Q | Flow-rate measurements |
| $L_i$ | Level measurements in the tanks |
| $P_i$ | Pressure measurements |
| $C_i$ | Contaminant concentration measurements |
| $F_i$ | Energy tariff |

The membership functions or the fuzzy assemblies characterising them are defined in the domain of each of the monitored parameters. The grain figure or granularity of the assemblies covering the domain of each control variable can be more or less fine and the relative membership functions of each fuzzy assembly can have different shapes. It is the knowledge of the problem domain that drives the definition of the fuzzy assemblies of each controlled variable. An example of the attribution characterisation of the fuzzy system is illustrated in Table 2.

The membership functions of Table 2 are all right triangular (at the ends of the domain) or isosceles triangular and two consecutive membership functions are partially overlapping. Should it be considered as convenient by the system designer, shapes different from the proposed one could be adopted.

Table 2: Qualitative description of an example for membership function

|  | Description | Membership Function |
|---|---|---|
| NG | Negative Great | Right Triangle |
| NM | Negative Middle | Isosceles Triangle |
| NP | Negative Small | Isosceles Triangle |
| 2E | Zero | Isosceles Triangle |
| PP | Positive Small | Isosceles Triangle |
| PM | Positive Middle | Isosceles Triangle |
| PG | Positive Great | Right Triangle |

It is not necessary that each domain of a controlled variable be covered with all defined membership functions. If it is considered convenient, it is possible to utilise a less fine granularity which is not symmetrical with respect to zero. The zero point represents the set point, that is to say the desired value of the controlled variable. An example of the coverage of the domain of each controlled variable with the membership functions defined in Table 2 is illustrated in Table 3.

In the example of Table 3, a fine and uniform granularity has been selected for the flow-rate parameters, while a less but anyway uniform fine granularity has been selected for level measurements in the tanks. As concerns the pressure and concentration measurements, a not uniform granularity has been selected, finer in the positive domain for pressure and finer in the negative domain for concentration. Lastly, as far a s the state variable representing the applied tariff range a scarcely fine but uniform granularity has been selected.

Table 3: Association of controlled variables and membership functions

|  | NG | NM | NP | ZE | PP | PM | PG |
|---|---|---|---|---|---|---|---|
| $Q_i$ | X | X | X | X | X | X | X |
| $L_i$ | X |  |  | X |  |  | X |
| $P_i$ | X |  |  | X | X | X | X |
| $C_i$ | X | X | X | X |  |  | X |
| $F_i$ | X |  |  | X |  |  | X |

The control variables, also called decision variables, are those by means of which it is possible to control the configuration of the water system or to adjust the circulating flows of drinkable water volumes. In this specific case, these are mainly variables representing the status of the pumps and of the adjustment valves (refer to Table 4), but it is possible to represent all those members the operation of which enables the flows of drinkable water volumes to be controlled or by means of which the water quality is controlled.

Each control variable has fuzzy systems associated thereto, which cover, with a more or less fine granularity, the whole domain of the variables themselves, as it can be observed in Tables 5 and 6.

Table 4: Definition of control variables

|  | Description |
|---|---|
| QPi | Flow-rate of i-th pump |
| $V_i$ | Adjustment of the i-th valve |

Table 5: Qualitative description of an example of membership functions for the control variable

|  | Description | Membership function |
|---|---|---|
| AT | Fully open | Right triangle |
| AM | Middle open | Isosceles triangle |
| AP | Scarcely open | Isosceles triangle |
| ZE | Zero | Isosceles triangle |
| CP | Scarcely closed | Isosceles triangle |
| CM | Middle closed | Isosceles triangle |
| CT | Fully closed | Right triangle |

Table 6: Association of control variables with membership functions

|  | AT | AM | AP | ZE | CP | CM | CT |
|---|---|---|---|---|---|---|---|
| QPi | X | X | X | X | X | X | X |
| $V_i$ | X |  |  | X | X | X | X |

The current value of each control variable is automatically defined by the SCADA system, based upon the current values of the controlled variables acquired by the system. The current value of the control variables is defined by means of a defuzzification operation of the active fuzzy assemblies relating to the same control variables.

The actualisation process of the control variables, as a consequence of the current acquired values of the controlled variables, assumes that a set of rules be defined to enable the fuzzy assemblies activated by the controlled variables to be associated to the fuzzy assemblies activated by the control variables. The rule set is implemented in the supervisory and control system and an example of which is illustrated in Table 7.

Only 12 among the many rules that can be possibly represented are illustrated in Figure 7. In this example, the first three rules can be utilised to define a control policy for the piezometric surface in order to minimise the leakages; rules 4 to 10 define the management policy for the tank aimed at preventing pumping operations when the energy cost is billed at the maximum tariff rate, unless it is absolutely necessary or when there is no contemporaneous anomalous flow-rate demand; the last two rules enable to manage the residual chlorine decrease and, consequently, a reduction of the protection of the conveyed volumes from contamination caused by contaminants.

Table 7: Association matrix between fuzzy assemblies of control and controlled variables

| Controlled Variables | | | | | | | | | Control Variables | | | | |
|---|---|---|---|---|---|---|---|---|---|---|---|---|---|
| F1 | L1 | P1 | P2 | P3 | C1 | Q1 | Q2 |  | QP 1 | QP 2 | V1 | V2 | V3 |
|  | PG | PG | PG | PG |  | NG | NG | 1 | CT | CT | CT | CT | CT |

(continued)

| Controlled Variables | | | | | | | | | Control Variables | | | | |
|---|---|---|---|---|---|---|---|---|---|---|---|---|---|
| F1 | L1 | P1 | P2 | P3 | C1 | Q1 | Q2 | | QP 1 | QP 2 | V1 | V2 | V3 |
|  | PG | PM | PM | PM |  | NM | NM | 2 | CT | CT | CP | CP | CP |
|  | PG | PM | PP | ZE |  | NP | ZE | 3 | CT | CT | CM | CM | ZE |
|  | PM |  |  |  |  |  |  | 4 | CP | CT |  |  |  |
|  | ZE |  |  |  |  |  |  | 5 | CP | CP |  |  |  |
|  | NP |  |  |  |  |  |  | 6 | AP | AT |  |  |  |
|  | NM |  |  |  |  |  |  | 7 | AM | AT |  |  |  |
|  | NG |  |  |  |  |  |  | 8 | AT | AT |  |  |  |
| PG | NP |  |  |  |  |  |  | 9 | CP | CP |  |  |  |
| PG | NP |  |  |  |  | PG | PG | 10 | AT | AT |  |  |  |
| PG | NP |  |  |  | NG |  |  | 11 | AT | AT |  |  |  |
| PM | NP |  |  |  | NM |  |  | 12 | AT | AM |  |  |  |

Each row of the association matrix an example of which is illustrated in Table 7 represents a rule and each rule has no need to have the same structure or it is not necessary that the control variables and the controlled variables be the same for each control rule: the case illustrated in Table 7 is a particular case in which all of the 12 rules relate the same control variables and controlled variables to one another.

Of course, the rules illustrated in Table 7 have no general validity, but they are specific for the plant for the control of which they have been designed . The problem this invention is aimed at resolving is the definition of the optimum association Table between potential control and controlled variables.

The higher or lower efficiency of the set of defined rules further depends on the granularity of the fuzzy assemblies covering the definition domain of the variables as well as on the type of the membership functions.

A "scorecard" system formed by a collection of virtual sensors or process indicators continuously up-dated by the supervisory system enables to ascertain that the efficiency of the fuzzy control system is unaltered during the time. In the case in which a decrease in the performances of the control system is monitored, it is necessary to provide for re-designing the same.

It has already been observed that the characteristic operations carried out by any fuzzy system are as follows:

- input fuzzification,
- fuzzy inference,
- composition of the fuzzy outputs,
- defuzzification.

The fuzzy system inputs are determined numeric values, the exemplary fuzzy system in question is characterised by five input measurements of flow-rate and pressure in different points of the water network:

1. Flow-rate in a first tube T_367
2. Flow-rate in a second tube T_368
3. Pressure in a first supply node NE_73
4. Pressure in a second supply node NE_11
5. Pressure in a third supply node NE_54.

The outputs of a fuzzy system are numeric values, in this case there are two outputs:

1. Closure grade of a first valve V_3
2. Closure grade of a second valve V_4.

Each input numeric value activates various fuzzy systems; if they are overlapping, the corresponding truth grades are generally different.

Three membership functions are determined for the pressure variables and three membership functions are determined for the flow-rate variables.

Therefore, a given numeric value of the pressure or the flow-rate can activate two membership functions at the most, because at a point of the universe of discourse two of them at the most are overlapping.

The results of the fuzzification allow to activate determined rules of the repertory: namely those rules the antecedent of which is a linear combination of the so obtained fuzzy assembly, then the antecedent of the activatable rules is found.

By referring to an assembly of rules as obtained by the simulator, the effectively activated rules are determined. The minimum truth grade of the antecedent fuzzy assemblies has been considered as the activation grade of a rule.

At the inference stage, a single type of output assembly can be inferred a number of times based upon different rules, generally with different truth grades, while the others are discarded.

The previously obtained output fuzzy assemblies are subjected to a logic operation OR. Upon obtaining a single output assembly, it is necessary to ascertain crisp numeric values. The "Center Of Gravity" (COG) method has been utilised, namely the defuzzified output value is the abscissa of the control of the output fuzzy system.

The system has five inputs, each characterised by three membership functions and by two outputs, so that we have $5^3 \cdot 2 = 250$ necessary rules (in effect, with 4 inputs, 10 rules are sufficient).

It has been already shown that the main characteristic of this invention is the utilisation of genetic algorithms for automatically and optimally designing a set of fuzzy rules .

The system for automatic and optimised design of a set of fuzzy rules is characterised by

- genetic algorithm
- fuzzy system
- hydraulic model.

The Genetic Algorithm has been utilised together with auxiliary programs for determining the value of the cost function for each individual of the population.

Starting from a random configuration (control strategy), the optimum configuration capable to minimise the cost function of the plant is ascertained, by respecting some imposed constraints: if the flow-rate is maximum and the pressure at the supply nodes is low, the open valve configuration is imposed at that time (as if the valves were absent); in similar way, when the flow-rate is low and the pressure is high, the closed valve configuration is imposed, thereby reducing the risk of losses.

When the difference between the average and the maximum values of the fitness function reaches a pre-established value, almost all of the population individuals reach the same configuration.

In the GA utilised for optimising the adjustment of the piezometric surface, each individual should represent a control strategy indicating the closure grade of the valves during the cycle under examination. To this aim, a codification consisting of integrals has been considered, in which:

- number of rows ($N_r$) = indicates the number of rules of the fuzzy controller;
- number of columns ($N_c$) = indicates the number of inputs/outputs of the fuzzy controller;
- the first five alleles (elements) of each row can take low ($B$=0), middle ($M$=1), high ($A$=2), any (#=0) values; the last allele can take low ($B$=0), middle ($M$=1), high ($A$=2) values.

Then. a chromosome is represented by $N_r * N_c$ alleles

|        | Qp | Qp | Pr | Pr | Pr | Gr_Val | Gr_Val I |
|--------|----|----|----|----|----|--------|----------|
| Rule 1 | B  | A  | M  | A  | #  | A      | M        |
| Rule 2 | B  | A  | #  | B  | #  | B      | B        |
| Rule 3 | A  | A  | M  | A  | M  | B      | B        |
| Rule 4 | B  | A  | M  | A  | #  | B      | B        |
| Rule 5 | B  | A  | M  | A  | #  | A      | M        |

Each row of the above Table represents a rule, the first row indicates

***if*** *flow-rate T_367 low* ***and*** *flow-rate T_368 high* ***and*** *pressure NE_37 middle* ***and*** *pressure NE_11 high* ***and*** *pressure*

*NE_54 any* **then** *closure of valve V_3 high, closure of valve V_4 middle.*

By this convention, each individual is represented by a matrix, or a chromosoma, having a size $N_r*N_c$, where $N_r$ is the number of rules and $N_c$ is the number of parameters of a rule.

In respect of the water network under examination, it has been assumed:

- number of pumps: two,
- number of valves: two,
- number of supply nodes: three,
- selected cycle: 24

For a fitness function to be assigned to each individual belonging to a generation created by the GA, a function adapted to evaluate the cost of the solution represented by the individual under examination is needed. The cost represented by each individual is related to the other costs deriving from individuals belonging to the same generation and, therefore, in respect of each individual, a fitness function is assigned so as to enable the program to evaluate to which extent such individual is adapted to reproduce in order to ameliorate the species.

The GA ascertains the cost connected with distributing water to the users in a hourly cycle, so as not to have an excessive pressure useless to the intended object, but this will increase the risk of losses, and so as to keep the pressure as close as possible to a reference pressure.

The implemented cost function depends on three measurements carried out on the water network, such as:

- piezometric pressure of the first node NE_73,
- piezometric pressure of the second node NE_11,
- piezometric pressure of the third node NE_54.

It is tried to minimise the difference between the measured pressure *Pmis* and the reference pressure *Pref.*

$$CTOT = \sum_{\Delta T=1}^{\Delta T \max} (Pmis - \Pr ef) + PEN$$

where:

$\Delta T$= unit intervals in which a cycle has been divided;
*PEN* = cost assigned to penalise any rule not found between an interval $\Delta T$ and the subsequent one.

The main parameters of a genetic algorithm are as follows: the size of a population, the cross-over likelihood and the mutation likelihood. It is necessary to very carefully select the values of these parameters; in fact, as the number of individuals increases, so the search range of a minimum solution enlarges; however, this also entails an increase in the machine time for generation of a whole population. This raises the problem to establish a number of individuals matching the requirements and, in the first place, the subject research times.

Various methods exist in literature to characterise the above mentioned parameters. However, when it is considered that the application versatility of a GA is restricted and it is better when it is configured as a function of the process under examination, it has been deemed convenient to carryout a sensitivity analysis for optimum determination of genetic parameters.

The values considered in the analysis are as follows:

- number of individuals: 50;
- cross-over likelihood: 0.2-0.4-0.8;
- mutation likelihood: 0.001-0.008;
- GA overlapping populations.

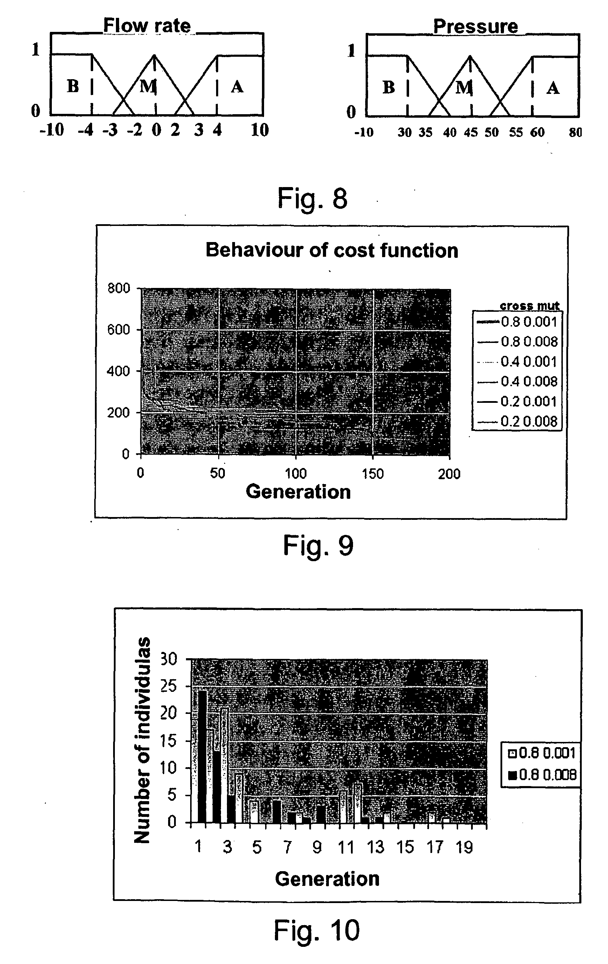

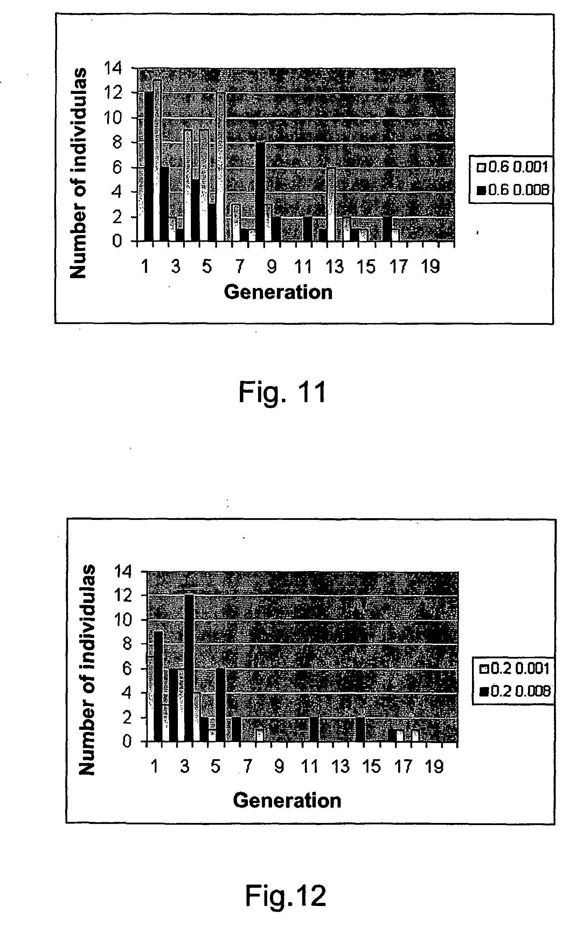

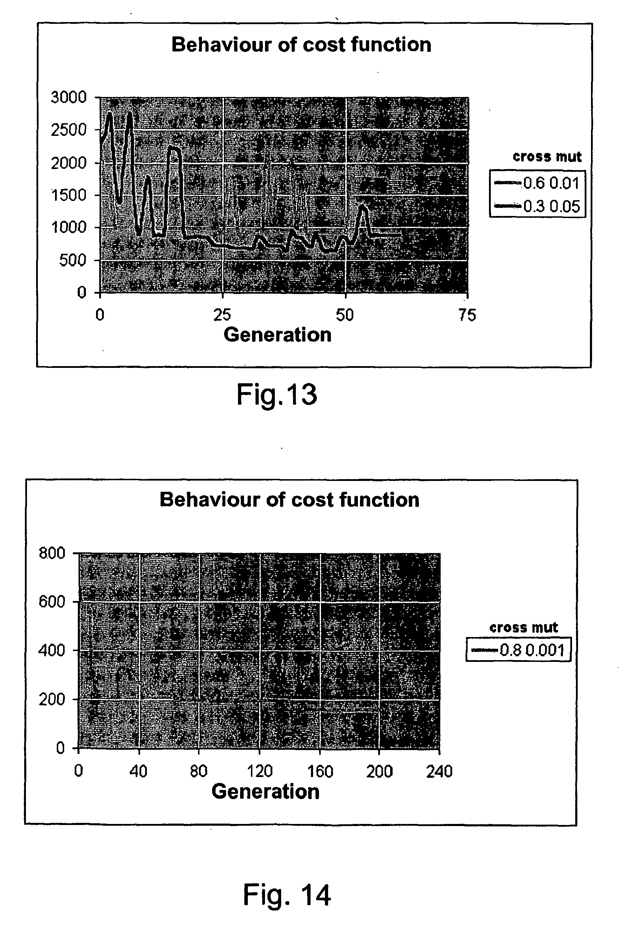

Some graphs relating to the parameter combinations are shown in Figures 10-13.

In characterising the GA typical parameters by performing a sensitivity analysis, in respect of the various parameter combinations, the not acceptable number of individuals per generation has been evidenced, where an individual of this kind indicates a not applicable strategy, namely hydrostatic levels less than 15 meters in some hours of the say. These data types evidence whether in the GA evolution each population is characterised by acceptable strategies, namely strategies that guarantee a water supply to the users.

A further search for an optimum solution to the problem has been carried out by modifying the genetic algorithm.

The values considered in the analysis are as follows:

- number of individuals: 50;
- cross-over likelihood: 0.3-0.6;
- mutation likelihood: 0.01-0.05;
- GA "non-overlapping population".

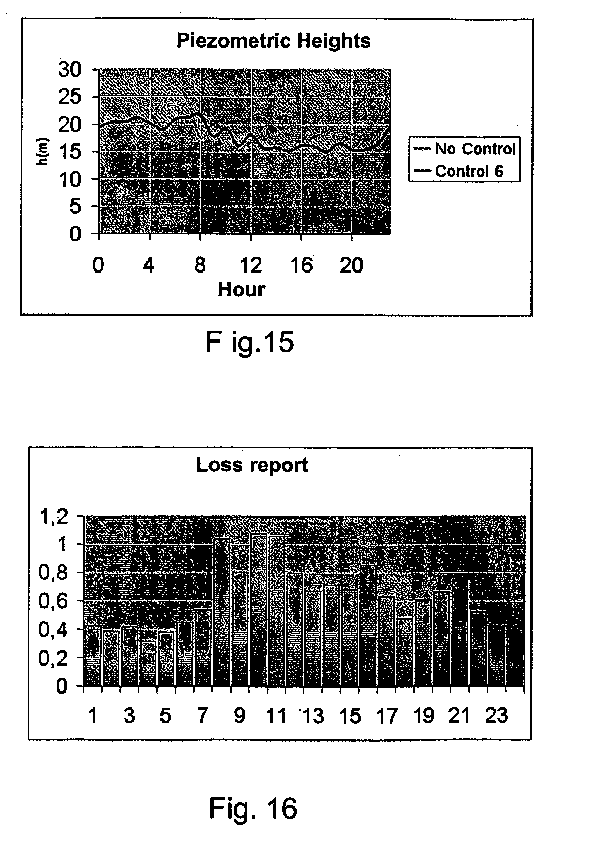

It can be observed by analysing Figures 15 and 16 that a selection of 50 individuals allows a larger and more effective search of the minimum cost. Furthermore, as the number of individuals and the cross-over and mutation likelihood increase, also the number of generations needed for completing the search increases and consequently also the search time becomes excessively long, even is slow dynamics systems are involved.

The best results have been achieved by considering a population of 50 individuals $p_c$=0.8, $p_m$=0.1.

To check the efficiency of the so realised program, various simulations have been carried out, adapted to find the optimum solution for controlling the piezometric surface.

Simulations have been carried out by positioning two pressure dissipating valves at the head end of the water network.

The parameters characterising the problem under examination are as follows:

1. localisation of the control points,
2. behaviour of the requested flow-rate,
3. behaviour of the piezometric surface with and without control.

The control points are positioned just downstream with respect to the valves. The test is based upon performing all of the rule search operations and of the piezometric surface control operations, by referring to supply nodes near to the valves.

The control points are positioned as follows:

1. a first supply node NE_54,
2. a second supply node NE_11, and
3. a supply node NE_73.

The achieved results, as they can be observed in Figure 18 in respect of node NE_54 (and similarly for the other two nodes), evidence that, following the optimum strategy as searched and ascertained by the GA, by operating on the valves, the piezometric surfaces are lowered.

As already said, experimental data shows that the material losses are proportional to the pressure in the network raised to an exponent equal to 1.15 - 1.18 (Goodwin 1980, above quoted, NWC 1980 above quoted).

Performing an evaluation of the economic revenue deriving from such percentage reduction of the material losses is a difficult task in lack of data relating to the loss coefficients. In the expectation of a measurement program, the following actions have been taken.

An estimation of the potential efficiency of the control strategy of the piezometric surface applied to the water network has been performed. Upon ascertaining the relationship linking the lost flow-rate to the average pressure raised to an exponent equal to. 1.18, the loss reduction caused by a lowering of the piezometric surface has been evaluated.

This value represents a valid figure of the convenience that an adjustment of the piezometric surface be performed in order to reduce the losses.

A loss rate of 30% has been assumed, such loss rate is considered as prudential.

The imposed rate relates to a material loss that can be reduced only by means of intervents aimed at carefully locating any hidden leakages and/or by a hydraulic requalification of the plants, therefore it is included in the definition of the physiologic loss in view of the plant status.

The lost volumes have been calculated at a rate of 30%.

Furthermore, a uniform distribution of the flow rates has been assumed in respect of the trunks and of the delivery or supply points.

By such methodology, an analysis of the network has been carried out, thereby establishing the behaviour of the losses in a 24 hour time span.

Simulations have been performed by positioning two pressure dissipating valves at the head end of the water plant and by ascertaining:

- average pressures in controlled conditions ($M_c$),
- average pressures in not controlled conditions ($M_{nc}$),

and by establishing a loss reduction ratio defined as follows:

$$R_p = (M_c \, / \, M_{nc})^{1.18}$$

The behaviour of $R_p$ during the 24 hour time span is illustrated in Figure 20.

By exploiting this quality, it is possible to calculate the economic saving per year and we can estimate a loss reduction corresponding to a reduction of the economic losses equal to about LIT 62.000.000 per year, under an estimation of the material loss equal to 30% of the inlet volumes, by calculating the reduction of such loss on daily lose and then calculating the recovered volumes. The monetary value of the so recovered volumes is calculated based upon the minimum sale price per mc, namely 600 LIT/mc.

The so ascertained saving exclusively represents the monetary saving, which means that the water supply service is simply paid, but it is certainly lower than the economic saving.

Various techniques, therefore, exist to improve the achieved results.

An improvement of the GA's could be achieved by means of a different allocation of the valves in particularly critic points of the network, or by utilising a higher number of pressure reducing valves.

The obtained results appear anyway to be satisfactory and can represent a valid starting point for subsequent developments of this methodology.

The preferred embodiments of this invention have been described and a number of variations have been suggested hereinbefore, but it should be understood that those skilled in the art can make other variations and changes.

**Claims**

1. An automatic method for determining an optimum management criterion for controlling an industrial system, comprising one or more operable control members, each of which takes a. state described by at least one corresponding control variable, the assembly of the states taken by said members defining a configuration of the industrial system, the industrial system taking an operation state defined by one or more physical parameters, each described by at least one controlled variable, the industrial system operating in an operative context defined by the operative state of the system and/or by the operative availability of one or more of said members and/or by one or more conditioning parameters external to the system, the configuration of the industrial system being adapted to be modified as a function of the operative context according to a management criterion comprising one or more "fuzzy" rules, as described by an association table between control variables and controlled variables, the modification of the industrial system taking automatically place by means of an attribution of a fuzzy assembly to each controlled variable in the table of the fuzzy rules, the application of the association table of the fuzzy rules and the attribution of a determined numeric value to the fuzzy assembly of each control variable resulting from said application, the method being **characterised in that** it comprises the following steps:

   A. defining $N$ management criteria, where $N \geq 1$;
   B. generating a population of $M$ agents, where $M \geq 1$, each of which represents an operative context;
   C. for each of said $N$ management criteria defined in step A., generating a corresponding population of $Q_i$ agents, where $i = 0,1,....(N-1)$ and where $Q_i \geq 1$, each agent being representative of an assembly of one or more fuzzy rules;
   D. performing a multi-species ecosystem selection and evolution iterative genetic algorithm, the ecosystem including said population of $M$ operative context agents and said $N$ populations of $Q_i$ fuzzy rule assembly agents, so that

   - in each population of fuzzy rules assemblies corresponding to a management criterion, to let those agents of fuzzy rule assemblies better responding to said one or more management criteria defined in step A to reproduce, according to a suitability grade, in respect of at least an operative context agent, as attributed to each agent of one or more fuzzy rule assemblies, and
   - in the population of operative contexts, to let the most hostile operative contexts to reproduce, according to a hostility grade attributed to each operative context agent generated in step B; and

   E. at the end of the multi-species ecosystem evolution, selecting the assembly of one or more fuzzy rules represented by the most suitable agent of one or more fuzzy rule assemblies according to said suitability grade.

**2.** A method according to claim 1, **characterised in that** said step B randomly generates said population of $M$ operative context representing agents.

**3.** A method according to claim 1 or 2, **characterised in that** said step C randomly generates said $N$ populations of $Q_i$ fuzzy rule assembly representing agents.

**4.** A method according to any one of the preceding claims, **characterised in that** $Q \leq M$.

**5.** A method according to claim 4, **characterised in that** said step D comprises the following sub-steps:

D.1.- distributing said population of $M$ operative context agents and said N populations of $Q_i$ fuzzy rule assembly agents in a toroidal two-dimensional representation grid having a number of cells equal to $M$, so that each cell of the grid comprises:

- one agent of the operative context population, and
- one agent of one or more of the $N$ populations of fuzzy rule assemblies relating to a corresponding management criterion;

D.2.- for each cell of the grid,
D.2.1.- simulating the operation of the industrial system in the operative context represented by the related agent belonging to the cell by modifying the configuration of the system according to the combination of all of the fuzzy rule assemblies represented by the related agents belonging to the cell,
D.2.- attributing a suitability grade $\varphi_i$ to each one or more fuzzy rule assembly agent belonging to the cell, where the suitability grade $\varphi_i$ has an intermediate value between a maximum numeric value $X$, equal to the best suitability grade, and a minimum numeric value $Y$, equal to the worst suitability grade,
D.2.3.- attributing a hostility grade $\rho_c$ to the operative context agent belonging to the cell equal to

$$\rho_c = (X - \varphi_c)$$

where $\varphi_c$ is a cumulative suitability grade of said $N$ fuzzy rule assembly agents belonging to the cell, as a function of the suitability grades $\varphi_i$ of the individual fuzzy rule assembly agents belonging to the cell, equal to

$$\varphi_c = F(\varphi_0, \varphi_1, \dots \varphi_{N-1}) \; ;$$

D.3.- checking the stopping condition of the iterative genetic algorithm, furnished by the convergence of the best value of the cumulative suitability grades $\varphi_c$ of all of the cells of the grid,
D.4.- if the result of the check of sub-step D.3 is negative, or the iterative genetic algorithm has not yet reached the stopping condition,
D.4.1.- marking each cell of the grid as available to being selected in the subsequent sub-step,
D.4.2. randomly selecting a first cell of the grid among the available ones and marking it as unavailable,
D.4.3.- defining an influence area of the first cell, as selected in sub-step D.4.2., comprising a number $w$ of cells,
D.4.4.- randomly selecting $m$ cells among said $w$ cells of the influence area defined in sub-step D.4.3., where $m \leq w$,
D.4.5.- randomly selecting a second cell among the m cells selected in sub-step D.4.4., each of said $m$ cells having a selection likelihood proportional to the respective cumulative suitability grade $\varphi_c$,
D.4.6.- for each of said $N$ management criteria, applying at least one coupling or crossover genetic operator to a pair of fuzzy rule assembly agents, one of which belongs to the first cell selected in sub-step D.4.2. and the other one belongs to the second cell selected in sub-step D.4.5., the agents of said pair being part of fuzzy rule assembly population relating to the considered management criterion, in order to obtain a pair of son agents belonging to the same population of the agent pair that generated them,
D.4.7.- randomly selecting two further cells among the $(m+1)$ cells of the group comprising the first cell selected in sub-step D.4.2. and the m cells selected in sub-step D.4.4., each of said $(m + 1)$ cells having a selection likelihood inversely proportional to the related cumulative suitability grade $\varphi_c$,
D.4.8.- replacing all of the one or more fuzzy rule assembly agents belonging to said two further cells selected in sub-step D.4.7., in such a way that, for each of said $n$ management criteria, the pair of fuzzy rule assembly agents belonging to the population related to the considered management criterion is replaced by the pair of son agents generated in sub-step D.4.6. belonging to the same population,

D.4.9.- randomly selecting a third cell among the $m$ cells selected in sub-step D.4.4., each of said $m$ cells having a selection likelihood proportional to the respective hostility grade $\rho_c$ of the operative context agent belonging to the cell,

D.4.10.- applying at least one coupling or crossover genetic operator to a pair of operative context agents, one of which belongs to the first cell selected in sub-step D.4.2. and the other belongs to the third cell selected in sub-step D.4.9., in order to obtain a pair of operative context son agents,

D.4.11.- randomly selecting two additional cells among the $(m + 1)$ cells of the group comprising the first cell selected in sub-step D.4.2. and the $m$ cells selected in sub-step D.4.4., each of said $(m + 1)$ cells having a selection likelihood inversely proportional to the respective hostility grade $\rho_c$ of the operative context agent belonging to the cell,

D.4.12.- replacing the pair of operative context agents belonging to the two additional cells selected in sub-step D.4.11. with the pair of operative context son agents generated in sub-step D.4.10,

D.4.13.- if the preceding sub-steps D.4.2. to D.4.12. have been iterated for number of iterations lower than a pre-established number $R$, with $R \leq M$, repeating the previously listed sub-steps starting from sub-step D.4.2.,

D.4.14.- if the preceding sub-steps D.4.2. to D.4.12. instead have been iterated for number of iterations equal to $R$, applying at least a mutation genetic operator to each operative context and to each one or more fuzzy rule assembly agent belonging to all of the cells of the grid,

D.4.15.- repeating all of the previously listed sub-steps starting from sub-step D.2.,

D.5.- if the result of the check in sub-step D.3. is negative, or the iterative genetic algorithm has reached the stopping condition, furnishing as optimum management criterion for controlling the complex industrial system the assembly of one or more fuzzy rules represented by the agent having the best suitability grade $\varphi_i$ among the agents belonging to the cell having the best cumulative suitability grade $\varphi_c$.

6. A method according to claim 5, **characterised in that** said step D.1. distributes said N populations of $Q_i$ fuzzy rule assembly agents in such a way that each cell of the grid comprises one agent of each of said $N$ populations of fuzzy rule assemblies relating to a corresponding management criterion.

7. A method according to claim 5 or 6, **characterised in that** at least one operative context agent represents an operative context comprising the effect of one or more accidental events, each of which has a pre-defined occurrence likelihood, in order that the cumulative occurrence likelihood of the accidental events relating to said operative context is higher than a pre-established minimum threshold value, the genetic operators applied to said at least one operative context agent, which generate at least one resulting operative context agent, being such as to maintain in said at least one resulting operative context agent said cumulative occurrence likelihood of said starting operative context agent.

8. A method according to claim 7, **characterised in that** the cumulative occurrence likelihood of the accidental events relating to said at least one operative context agent is lower than a pre-established maximum threshold value.

9. A method according to any one of claims 5 to 8, **characterised in that** the maximum numeric value $X$ of the suitability grade $\varphi_i$ is equal to 1.0 and **in that** the minimum numeric value $Y$ of the suitability grade $\varphi_i$, is equal to 0.0.

10. A method according to any one of claims 5 to 9, **characterised in that** the cumulative suitability grade $\varphi_c$ of said $N$ one or more fuzzy rule assembly agents belonging to a single cell of the grid is equal to the minimum suitability grade $\varphi_i$ of the individual one or more fuzzy rule assembly agents belonging to said cell, namely

$$\varphi_c = min \ \{\varphi_0, \ \varphi_1, \ ..., \ \varphi_{N-1}\}.$$

11. A method according to any one of claims 5 to 10, **characterised in that** , in step D.4.2., the first cell is randomly selected among the available cells of the grid in equi-likelihood manner.

12. A method according to any one of the preceding claims, **characterised in that** all of the $N$ populations of fuzzy rule assembly representing agents include the same number of agents, namely $Q_i = Q$, where $i = 0,1, ..., (N-1)$.

13. A method according to claim , **characterised in that** $Q_i = Q = M$, where $i = 0,1, ..., (N-1)$.

**14.** A method according to any one of the preceding claims, **characterised in that** the industrial system is a water system for management and control of a water service, comprising the collection and/or the supply and/or the treatment and/or the distribution of drinkable water volumes and/or the removal and/or the treatment of the wastes and/or the return of the wastes to the collection mass, said water system comprising a water network of conduits and/or tanks, the operative control members of said water system comprising check and/or adjustment valves and/or pumps and/or pumping plants and/or check and/or adjustment members, the control variables defining the state of a corresponding operative control member comprising the pumping flow-rate of a pump and/or the adjustment grade of a valve, the physic parameters defining the operation state of the water system comprising the flow-rate in one or more conduits and/or the pressure of the fluid at one or more points and/or the concentration of contaminants in the fluid and/or the fluid level in one or more tanks and/or the flow-rate pumped by one or more pumping plants and/or the piezometric surface of the fluid at one or more points, the availability to operation of one or more of said members comprising the definition of the failure state of the concerned members, the conditioning parameters external to the system comprising the hourly law of the meteoric flows and/or the hourly energy billing rate and/or the hourly law of the drinkable water demands and/or the abrupt increases in the drinkable water volume demands and/or exceptional meteoric flows.

**15.** A method according to claim 14, **characterised in that** said $N$ management criteria defined in step A comprise the energy saving and/or the minimisation of the material losses and/or the water resource saving and/or the fulfilment of the hydraulic constraints and/or the fulfilment of the quality parameters of the drinkable water volumes and/or the fulfilment of the minimum levels of quality figure of the service.

**16.** An automatic method for management and control according to a dynamically up-dated optimum management criterion for an industrial system, comprising one or more operable control members, each of which takes a state described by at least one corresponding control variable, the assembly of the states taken by said members defining a configuration of the industrial system, the industrial system taking an operation state defined by one or more physical parameters, each described by at least one correspondent controlled variable, the industrial system operating in an operative context defined by the operative state of the system and/or by the operative availability of one or more of said members and/or by one or more conditioning parameters external to the system, the configuration of the industrial system being adapted to be modified as a function of the operative context according to a actual management criterion comprising one or more "fuzzy" rules, as described by an association table between control variables and controlled variables, the method being **characterised in that** it comprises the following steps:

F.- monitoring the operative context in which the concerned system operates until a variation of this operative context is detected;

G.- checking whether the current management criterion is adapted to manage the variations of the operative context, by modifying the configuration of the industrial system in order to satisfy the current management criterion;

H.- if the result of the check step G. is negative,

H.1.- determining a new current management criterion by means of the optimum control management criterion method according to any one of claims 1 to 15,

H.2.- checking whether the new current management criterion as determined in step H.1. is adapted to manage the variation of the operative context, by means of a simulation of the variation of the industrial system configuration, as a function of the varied operative context, according to the new current management criterion and, if the result of the check is negative, reverting to previous step H.1.;

I.- modifying the configuration of the industrial system in order to satisfy the current management criterion;

J.- repeating the previously listed steps starting from step F.

**17.** A method according to claim 16, **characterised in that**, subsequent to step F. and prior to step G., the following step is carried out:

K.- selecting, from a data bank containing a number O of predetermined management criteria, all of the contained management criteria and marking them as available;

and **in that**, during step H., prior to step H.1., the following additional steps are carried out:

H.3.- checking for the existence of at least one available management criterion in said data bank of predetermined management criteria;

H.4.- if the result of the check in step H.3. is negative, performing step H.1.;

H.5.- if the result of the check in step H.3. is positive, selecting one of the available management criteria in said data bank of predetermined management criteria, adopting it as current management criterion, marking it ad unavailable and reverting to step G.

**18.** A method according to claim 16 or 17, **characterised in that** said steps F, G, I and J are carried out by a Supervisory Control And Data Acquisition (SCADA) system of the digital technology and level hierarchical architecture.

**19.** A method according to any one of claims 16 to 18, **characterised in that** said step G. for checking that the current management criterion is adapted to manage the variation of the operative context comprises an analysis of the time behaviour of at least an efficiency figure of the industrial system.

**20.** An electronic system **characterised in that** it is adapted to carry out the automatic method for determining an optimum management criterion for controlling an industrial system according to any one of the preceding claims 1 to 15.

**21.** A computer program **characterised in that** it comprises code means adapted to execute, when running on a computer, the automatic method for determining an optimum management criterion for controlling an industrial system according to any one of the preceding claims 1 to 15.

**22.** A memory medium having a program stored therein **characterised in that** the program is the computer program according to claim 21.

**23.** An automatic system for management and control of an industrial system, **characterised in that** it is adapted to execute the automatic management and control method, according to a dynamically up-dated optimum management criterion, of an industrial system according to any one of preceding claims 16 to 19.

**Patentansprüche**

**1.** Automatisches Verfahren zur Ermittlung eines optimalen Managementkriteriums zur Steuerung eines industriellen Systems, das ein oder mehrere betriebsfähige Steuerelemente aufweist, von denen jedes einen Zustand einnimmt, der durch mindestens eine entsprechende Stellgröße beschrieben wird, wobei die Anordnung der durch die Elemente eingenommenen Zustände eine Konfiguration des industriellen Systems definiert, das industrielle System einen Betriebszustand einnimmt, der durch einen oder mehrere physikalische Parameter definiert ist, von denen jeder durch mindestens eine Regelgröße beschrieben wird, wobei das industrielle System in einem operativen Kontext arbeitet, der durch den Betriebszustand des Systems und/oder durch die operative Verfügbarkeit eines oder mehrerer der Elemente und/oder durch einen oder mehrere Bedingungsparameter außerhalb des Systems definiert wird, wobei die Konfiguration des industriellen Systems angepasst ist, um als eine Funktion des operativen Kontextes entsprechend eines Managementkriteriums modifiziert zu werden, welches eine oder mehrere "Fuzzy"-Regeln umfasst, wie durch eine Zuordnungstabelle zwischen Stellgrößen und Regelgrößen beschrieben, wobei die Modifikation des industriellen Systems automatisch mit Hilfe einer Zuweisung einer Fuzzy-Anordnung zu jeder Regelgröße in der Tabelle der Fuzzy-Regeln stattfindet, wobei die Anwendung der Zuordnungstabelle der Fuzzy-Regeln und die Zuweisung eines bestimmten Zahlenwertes zu der Fuzzy-Anordnung jeder Stellgröße aus der Anwendung resultiert und wobei das Verfahren **dadurch gekennzeichnet ist, dass** es die folgenden Schritte aufweist:

A. Definition von $N$ Managementkriterien, wobei $N \geq 1$;
B. Erzeugung einer Gesamtheit von M Agenten, wobei $M \geq 1$ ist von denen jeder einen operativen Kontext repräsentiert;
C. für jedes der in Schritt A definierten $N$ Managementkriterien, Erzeugung einer entsprechenden Gesamtheit von $Q_i$ Agenten, wobei $i$=0, 1 ,....(N-1) und wobei $Q_i \geq 1$, wobei jeder Agent repräsentativ für eine Anordnung einer oder mehrerer Fuzzy-Regeln ist;
D. Ausführung eines Vielarten-Ökosystem-Selektions- und evolutionsiterativen genetischen Algorithmus, wobei das Ökosystem die Gesamtheit der $M$ operativen Kontextagenten und die $N$ Gesamtheiten der $Q_i$ Fuzzy-Regel-Anordnungsagenten enthält, so dass

- in jeder Gesamtheit von Fuzzy-Regel-Anordnungen entsprechend eines Managementkriteriums jene Agenten von Fuzzy-Regel-Anordnungen zur Reproduktion gemäß eines Eignungsgrades in Bezug auf mindestens einen operativen Kontextagenten, wie jedem Agenten einer oder mehrerer Fuzzy-Regel-Anordnungen zugewiesen, zugelassen werden, die besser auf die in Schritt A definierte eine oder mehrere Managementkriterien reagieren, und

- in der Gesamtheit operativer Kontexte die ablehnendsten operativen Kontexte zur Reproduktion gemäß eines Ablehnungsgrades, der jedem, in Schritt B erzeugten operativen Kontextagenten zugewiesen wird, zugelassen werden, und

E. am Ende der Vielarten-Ökosystem-Evolution, die Selektion der Anordnung einer oder mehrerer Fuzzy-Regeln, die durch den geeignetsten Agenten einer oder mehrerer Fuzzy-Regel-Anordnungen entsprechend des Eignungsgrades repräsentiert werden.

2. Verfahren nach Anspruch 1, **dadurch gekennzeichnet, dass** Schritt B die Gesamtheit von $M$ operativen Kontext repräsentierenden Agenten zufällig erzeugt.

3. Verfahren nach Anspruch 1 oder 2, **dadurch gekennzeichnet, dass** Schritt C die $N$ Gesamtheiten von $Q_i$ Fuzzy-Regel-Anordnungen repräsentierenden Agenten zufällig erzeugt.

4. Verfahren nach einem der vorhergehenden Ansprüche, **dadurch gekennzeichnet, dass** $Q_i \le M.$

5. Verfahren nach Anspruch 4, **dadurch gekennzeichnet, dass** Schritt D die folgenden Unterschritte aufweist:

D.1.- Verteilung der Gesamtheit von $M$ operativen Kontextagenten und der $N$ Gesamtheiten von $Q_i$ Fuzzy-Regel-Anordnungen repräsentierenden Agenten in einem toroiden zweidimensionalen Darstellungsraster, das über eine Anzahl von Zellen, die gleich $M$ ist, aufweist, so dass jede Zelle des Rasters Folgendes umfasst:

einen Agenten der Gesamtheit des operativen Kontextes, und
einen Agenten einer oder mehrerer der N Gesamtheiten von Fuzzy-Regel-Anordnungen in Zusammenhang mit einem entsprechenden Managementkriterium;

D.2.- für jede Zelle des Rasters
D.2.1.- Simulation des Betriebs des industriellen Systems in dem operativen Kontext, der durch den zugehörigen Agenten, welcher zu der Zelle gehört, repräsentiert wird, durch die Modifizierung der Konfiguration des Systems entsprechend der Kombination aller Fuzzy-Regel-Anordnungen, die durch die zugehörigen, zu der Zelle gehörenden Agenten repräsentiert werden.
D.2.- Zuweisung eines Eignungsgrades $\varphi_i$ zu jedem der einen oder mehreren zu der Zelle gehörenden Fuzzy-Regel-Anordnungs-Agenten, wobei der Eignungsgrad $\varphi_i$ einen Zwischenwert zwischen einem maximalen Zahlenwert $X$, der dem besten Eignungsgrad entspricht, und einem minimalen Zahlenwert $Y$, der dem schlechtesten Eignungsgrad entspricht, hat,
D.2.3.- Zuweisung eines Ablehnungsgrades $\rho_c$ zu dem zu der Zelle gehörenden operativen Kontextagenten, gemäß:

$$\rho_c = (X - \varphi_c)$$

wobei $\varphi_c$ ein kumulativer Eignungsgrad der N Fuzzy-Regel-Anordnungs-Agenten, die zu der Zelle gehören, ist, als eine Funktion des Eignungsgrades $\varphi_i$ der einzelnen Fuzzy-Regel-Anordnungs-Agenten, die zu der Zelle gehören, die gleich dem Folgenden ist:

$$\varphi_c = F(\varphi_0, \varphi_1, \dots \varphi_{N-1}) \,,$$

D.3.- Überprüfung der Anhaltebedingung des iterativen genetischen Algorithmus, die durch die Annäherung des besten Wertes des kumulativen Eignungsgrades $\varphi_c$ aller Zellen des Rasters geliefert wird,
D.4.- wenn das Ergebnis der Überprüfung des Unterschrittes D.3. negativ ist oder der iterative genetische Algorithmus die Anhaltebedingung noch nicht erreicht hat,
D.4.1.- Markieren jeder Zelle des Rasters als verfügbar, um in dem anschließenden Unterschritt ausgewählt zu werden,
D.4.2.- zufällige Auswahl einer ersten Zelle des Rasters aus den Verfügbaren und Markierung selbiger als nicht verfügbar,

D.4.3.- Festlegung eines Einflussbereiches der ersten Zelle, wie in Unterschritt D.4.2. gewählt, der eine Anzahl $w$ von Zellen umfasst,

D.4.4.- zufällige Auswahl von $m$ Zellen aus w Zellen des Einflussbereiches, der in Unterschritt D.4.3. festgelegt wurde, wobei $m \leq w$ ist,

D.4.5.- zufällige Auswahl einer zweiten Zelle aus den in Unterschritt D.4.4. ausgewählten $m$ Zellen, wobei jede der $m$ Zellen eine Auswahlwahrscheinlichkeit aufweist, die proportional zu dem entsprechenden kumulativen Eignungsgrad $\varphi_c$ ist,

D.4.6.- für jedes der $N$ Managementkriterien, Anwendung mindestens eines genetischen Kopplungs- oder Kreuzungsoperators auf ein Paar von Fuzzy-Regel-Anordnungs-Agenten, wovon einer zu der ersten, in Unterschritt D.4.2. ausgewählten Zelle und der andere zu der zweiten, in Unterschritt D.4.5. ausgewählten Zelle gehört, wobei die Agenten des Paares Teil der Fuzzy-Regel-Anordnungs-Gesamtheit sind, die sich auf das betrachtete Managementkriterium bezieht, um ein Paar von Sohn-Agenten zu erhalten, die zu der gleichen Gesamtheit gehören wie das Agentenpaar, welches sie erzeugt hat,

D.4.7. zufällige Auswahl zweier weiterer Zellen aus den $(m+1)$ Zellen der Gruppe, die die erste, in Unterschritt D.4.2 ausgewählte Zelle und die in Unterschritt D.4.4. ausgewählten $m$ Zellen aufweist, wobei jede der $(m+1)$ Zellen eine Auswahlwahrscheinlichkeit aufweist, die umgekehrt proportional zu dem zugehörigen kumulativen Eignungsgrad $\varphi_c$ ist,

D.4.8.- Ersetzen aller der einen oder mehreren Fuzzy-Regel-Anordnungs-Agenten, die zu den in Unterschritt D.4.7. ausgewählten zwei weiteren Zellen gehören, auf solche Weise, dass für jedes der $n$ Managementkriterien das Paar der Fuzzy-Regel-Anordnungs-Agenten, die zu der Gesamtheit gehören, welche sich auf das betrachtete Managementkriterium bezieht, durch das in Unterschritt D.4.6. erzeugte Paar der Sohn-Agenten ersetzt wird, welches zu derselben Gesamtheit gehört,

D.4.9.- zufällige Auswahl einer dritten Zelle aus den in Unterschritt D.4.4. ausgewählten $m$ Zellen, wobei jede der $m$ Zellen eine Auswahlwahrscheinlichkeit aufweist, die proportional zu dem entsprechenden Ablehnungsgrad $\rho_c$ des operativen Kontextagenten ist, der zu der Zelle gehört,

D.4.10.- Anwendung mindestens eines genetischen Kopplungs- oder Kreuzungsoperators auf ein Paar von operativen Kontextagenten, wovon einer zu der ersten, in Unterschritt D.4.2. ausgewählten Zelle und der andere zu der dritten, in Unterschritt D.4.9. ausgewählten Zelle gehört, um ein Paar von Sohn-Agenten zu erhalten,

D.4.11- zufällige Auswahl zweier zusätzlicher Zellen aus den $(m+1)$ Zellen der Gruppe, die die erste, in Unterschritt D.4.2 ausgewählte Zelle und die in Unterschritt D.4.4. ausgewählten $m$ Zellen aufweist, wobei jede der $(m+1)$ Zellen eine Auswahlwahrscheinlichkeit aufweist, die umgekehrt proportional zu dem zugehörigen Ablehnungsgrad $\rho_c$ des operativen Kontextagenten ist, der zu der Zelle gehört,

D.4.12.- Ersetzen des Paares operativer Kontextagenten, welches zu den zwei zusätzlichen, in Unterschritt D.4.11 ausgewählten Zellen gehört, durch das Paar operativer Kontext-Sohn-Agenten, die in Unterschritt D.4.10 erzeugt wurden,

D.4.13.- wenn die vorangegangenen Unterschritte D.4.2. bis D.4.12. für eine Anzahl von Iterationen wiederholt wurden, die niedriger ist als eine vorher festgelegte Anzahl $R$, für die gilt $R \leq M$, Wiederholen der vorstehend aufgeführten Unterschritte, beginnend bei Unterschritt D.4.2.,

D.4.14.- wenn die vorangegangenen Unterschritte D.4.2. bis D.4.12. stattdessen für eine Anzahl von Iterationen, die gleich $R$ ist, wiederholt wurden, Anwenden mindestens eines genetischen Mutationsoperators auf jeden operativen Kontextagenten und auf jeden einen oder mehrere Fuzzy-Regel-Anordnungs-Agenten, der zu allen Zellen des Rasters gehört,

D.4.15.- Wiederholen aller vorstehend aufgeführten Unterschritte, beginnend bei Unterschritt D.2.,

D.5.- wenn das Ergebnis der Überprüfung in Unterschritt D.3. negativ ist oder der iterative genetische Algorithmus die Anhaltebedingung erreicht hat, Lieferung der Anordnung einer oder mehrerer Fuzzy-Regeln, die durch den Agenten mit dem besten Eignungsgrad $\varphi_i$ unter den zu der Zelle mit dem besten kumulativen Eignungsgrad $\varphi_c$ gehörenden Agenten repräsentiert wird, als optimales Managementkriterium zur Steuerung des komplexen industriellen Systems.

6. Verfahren nach Anspruch 5, **dadurch gekennzeichnet, dass** der Schritt D.1. die $N$ Gesamtheiten der $Q_i$ Fuzzy-Regel-Anordnungs-Agenten so verteilt, dass jede Zelle des Rasters einen Agenten jeder der N Gesamtheiten von Fuzzy-Regel-Anordnungen aufweist, die sich auf ein entsprechendes Managementkriterium beziehen.

7. Verfahren nach Anspruch 5 oder 6, **dadurch gekennzeichnet, dass** mindestens ein operativer Kontextagent einen operativen Kontext repräsentiert, der die Wirkung eines oder mehrerer zufälliger Ereignisse umfasstt, von denen jedes eine vordefinierte Eintrittswahrscheinlichkeit besitzt, damit die kumulative Eintrittswahrscheinlichkeit der zufälligen Ereignisse, die sich auf den operativen Kontext beziehen, höher ist als ein vorher festgelegter minimaler Schwellwert, wobei die genetischen Operatoren, die auf den mindestens einen operativen Kontextagenten angewendet werden und welche mindestens einen resultierenden operativen Kontextagenten erzeugen, von der Art sind, dass sie in dem mindestens einen resultierenden operativen Kontextagenten die kumulative Eintrittswahrscheinlichkeit des operativen Kontextagenten beibehalten.

8. Verfahren nach Anspruch 7, **dadurch gekennzeichnet, dass** die kumulative Eintrittswahrscheinlichkeit der zufälligen Ereignisse, die sich auf den mindestens einen operativen Kontextagenten beziehen, geringer ist als ein vorher festgelegter maximaler Schwellwert.

9. Verfahren nach einem der Ansprüche 5 bis 8, **dadurch gekennzeichnet, dass** der maximale Zahlenwert $X$ des Eignungsgrades $\varphi_i$ gleich 1,0 ist, und **dadurch**, dass der minimale Zahlenwert $Y$ des Eignungsgrades $\varphi_i$ gleich 0,0 ist.

10. Verfahren nach einem der Ansprüche 5 bis 9, **dadurch gekennzeichnet, dass** der kumulative Eignungsgrad $\varphi_c$ der $N$ einen oder mehr Fuzzy-Regel-Anordnungs-Agenten, die zu einer einzelnen Zelle des Rasters gehören, gleich dem kleinsten Eignungsgrad $\varphi_i$ der einzelnen einen oder mehr Fuzzy-Regel-Anordnungs-Agenten, die zu der Zelle gehören, ist, nämlich

$$\varphi_c = min \; \{\varphi_0, \; \varphi_1, \quad , \; \varphi_{N-1}\}.$$

11. Verfahren nach einem der Ansprüche 5 bis 10, **dadurch gekennzeichnet, dass**, in Schritt D.4.2. die erste Zelle zufällig aus den verfügbaren Zellen des Rasters mit gleicher Wahrscheinlichkeit ausgewählt wird.

12. Verfahren nach einem der vorstehenden Ansprüche, **dadurch gekennzeichnet, dass** alle $N$ Gesamtheiten der Fuzzy-Regel-Anordnung repräsentierenden Agenten dieselbe Anzahl von Agenten enthalten, nämlich $Q_i = Q$, wobei $i = 0,1, ..., (N-1)$ ist.

13. Verfahren nach Anspruch, **dadurch gekennzeichnet, dass** $Q_i = Q = M$, wobei $i = 0,1, ..., (N-1)$ ist.

14. Verfahren nach einem der vorstehenden Ansprüche, **dadurch gekennzeichnet, dass** das industrielle System ein Wassersystem zum Management und zur Steuerung einer Wasserversorgung ist, welches die Sammlung und/oder die Lieferung und/oder die Behandlung und/oder die Verteilung trinkbarer Wassermengen und/oder die Beseitigung und/oder die Behandlung des Abwassers und/oder die Rückführung des Abwassers zu der Sammelmasse umfasst, wobei das Wassersystem ein Wassernetzwerk von Leitungen und/oder Tanks umfasst, wobei die betriebsfähigen Steuerelemente des Wassersystems Rückschlag- und/oder Stellventile und/oder Pumpen und/oder Pumpwerke und/oder Prüf- und/oder Einstellelemente umfassen, wobei die Stellgrößen den Status eines entsprechenden betriebsbereiten Steuerelements, welches die Pumpenförderleistung einer Pumpe und/oder den Einstellgrad eines Ventils umfasst, definieren, wobei die physikalischen Parameter, die den Betriebsstatus des Wassersystems definieren, die Durchflussmenge in einer oder mehr Leitungen und/oder den Druck der Flüssigkeit an einem oder mehreren Punkten und/oder die Konzentration von Schadstoffen in der Flüssigkeit und/oder den Füllstand in einem oder mehreren Tanks und/oder die von einer oder mehreren Pumpwerken gepumpte Durchflussmenge und/oder die piezometrische Oberfläche der Flüssigkeit an einem oder mehreren Punkten umfassen, wobei die Verfügbarkeit für den Einsatz eines oder mehrerer der Elemente, die Definition des Status der Fehlfunktion des betreffenden Elements umfasst, die Bestimmungsparameter außerhalb des Systems, die den stündlichen Satz der Meteorströme und/oder den stündlichen Energiegebührensatz und/oder den stündlichen Satz des Bedarfs an trinkbarem Wasser und/oder die unerwartete Zunahme des Bedarfs der Trinkwassermenge und/oder außergewöhnliche Meteorströme umfassen.

15. Verfahren nach Anspruch 14, **dadurch gekennzeichnet, dass** die, in Schritt A definierten, $N$ Managementkriterien die Energieeinsparung und/oder die Minimierung von Materialverlusten und/oder die Einsparung von Wasserressourcen und/oder die Einhaltung der hydraulischen Grenzen und/oder die Einhaltung der Qualitätsparameter der Trinkwassermengen und/oder die Einhaltung der Untergrenzen der Qualitätskennzahl des Betriebs umfassen.

16. Automatisches Verfahren für das Management und die Steuerung gemäß einem dynamisch aktualisierten optimalen Managementkriterium für ein industrielles System, welches ein oder mehrere betriebsfähige Steuerelemente aufweist, von denen jedes einen Zustand annimmt, der durch mindestens eine entsprechende Stellgröße beschrieben wird, wobei die Anordnung der durch die Elemente angenommenen Zustände eine Konfiguration des industriellen Systems definiert, wobei das industrielle System einen Betriebszustand annimmt, der durch einen oder mehrere physikalische Parameter definiert wird, von denen jeder durch mindestens eine entsprechende Regelgröße beschrieben wird, wobei das industrielle System in einem operativen Kontext arbeitet, der durch den Betriebszustand des Systems und/oder durch die operative Verfügbarkeit eines oder mehrerer der Bauteile und/oder durch einen oder mehrere Bestimmungsparameter außerhalb des Systems definiert wird, wobei die Konfiguration des industriellen Systems angepasst wird, um als eine Funktion des operativen Kontextes gemäß einem effektiven Managementkriterium, welches eine oder mehrere "Fuzzy"-Regeln umfasst, wie durch eine Zuordnungstabelle zwischen Stellgrößen und Regelgrößen beschrieben, modifiziert zu werden, wobei das Verfahren **dadurch gekennzeichnet ist, dass** es folgende Schritte umfasst:

F.- Überwachung des operativen Kontextes, in dem das betreffende System arbeitet, bis eine Änderung dieses operativen Kontextes erfasst wird;

G.- Überprüfung, ob das gegenwärtige Managementkriterium angepasst ist, um die Änderungen des operativen Kontextes mittels der Modifizierung der Konfiguration des industriellen Systems zur Erfüllung des gegenwärtigen Managementkriteriums vorzunehmen;

H.- wenn das Ergebnis der Überprüfung in Schritt G. negativ ist,

H.1.- Bestimmung eines neuen gegenwärtigen Managementkriteriums mittels des Verfahrens des optimalen Steuerungsmanagementkriteriums nach einem der Ansprüche 1 bis 15,

H.2.- Überprüfung, ob das neue gegenwärtige Managementkriterium, wie in Schritt H.1. bestimmt, angepasst ist, um die Änderung des operativen Kontextes vorzunehmen, mittels einer Simulation der Änderung der Konfiguration des industriellen Systems als eine Funktion des veränderten operativen Kontextes gemäß dem neuen gegenwärtigen Managementkriterium und, wenn das Ergebnis der Überprüfung negativ ist, Rückkehr zum vorhergehenden Schritt H.1.;

1.- Modifizierung der Konfiguration des industriellen Systems zur Erfüllung des gegenwärtigen Managementkriteriums;

J.- Wiederholung der vorstehend angeführten Schritte, beginnend bei Schritt F.

17. Verfahren nach Anspruch 16, **dadurch gekennzeichnet, dass**, im Anschluss an Schritt F. und vor Schritt G., der folgende Schritt durchgeführt wird:

K.- Auswahl aller enthaltenen Managementkriterien aus einer Datenbank, die eine Anzahl O der vorher festgelegten Managementkriterien enthält, und Markierung derer als verfügbar;

und **dadurch**, dass, während Schritt H., vor Schritt H.1., die folgenden zusätzlichen Schritte ausgeführt werden:

H.3.- Überprüfung der Existenz mindestens eines verfügbaren Managementkriteriums in der Datenbank vorher festgelegter Managementkriterien;

H.4.- wenn das Ergebnis der Überprüfung in Schritt H.3. negativ ist, Ausführen von Schritt H.1.;

H.5.- wenn das Ergebnis der Überprüfung in Schritt H.3. positiv ist, Auswahl eines oder mehrerer der verfügbaren Managementkriterien in Datenbank vorher festgelegter Managementkriterien, Annahme dessen als gegenwärtiges Managementkriterium, Markierung dessen als nicht verfügbar und Rückkehr zu Schritt G.

18. Verfahren nach Anspruch 16 oder 17, **dadurch gekennzeichnet, dass** die Schritte F, G, I und J durch ein System zur Überwachungssteuerung und Datenerfassung (Supervisory Control And Data Acquisition = SCADA) der digitalen Technik und der Hierarchiestufenarchitektur ausgeführt werden.

19. Verfahren nach einem der Ansprüche 16 bis 18, **dadurch gekennzeichnet, dass** der Schritt G. zur Überprüfung, dass das gegenwärtige Managementkriterium angepasst ist, um die Änderungen des operativen Kontextes vorzunehmen, eine Analyse des Zeitverhaltens mindestens einer Effizienzkennzahl des industriellen Systems umfasst.

20. Elektronisches System, **dadurch gekennzeichnet, dass** es angepasst ist, um das automatische Verfahren zur Ermittlung eines optimalen Managementkriteriums zur Steuerung eines industriellen Systems nach einem der vorstehenden Ansprüche 1 bis 15 auszuführen.

21. Computerprogramm, **dadurch gekennzeichnet, dass** es Codemittel aufweist, die, wenn auf einem Computer ausgeführt, zur Durchführung des automatischen Verfahrens zur Ermittlung eines optimalen Managementkriteriums zur Steuerung eines industriellen Systems nach einem der vorstehenden Ansprüche 1 bis 15 angepasst sind.

**22.** Speichermedium, auf dem ein Programm gespeichert ist, **dadurch gekennzeichnet, dass** das Programm das Computerprogramm nach Anspruch 21 ist.

**23.** Automatisches System zum Management und zur Steuerung eines industriellen Systems, **dadurch gekennzeichnet, dass** es zur Durchführung des automatischen Management- und Steuerungsverfahrens gemäß einem dynamisch aktualisierten optimalen Managementkriterium eines industriellen Systems nach einem der vorhergehenden Ansprüche 16 bis 19 angepasst ist.

**Revendications**

**1.** Procédé automatique pour déterminer un critère de gestion optimum pour commander un système industriel comprenant un ou plusieurs éléments de commande aptes à être actionnés, dont chacun prend un état décrit par au moins une variable de commande correspondante, l'ensemble des états pris par lesdits éléments définissant une configuration du système industriel, le système industriel prenant un état de fonctionnement défini par un ou plusieurs paramètres physiques, chacun décrit par au moins une variable commandée, le système industriel fonctionnant dans un contexte opérationnel défini par l'état opérationnel du système et/ou par la disponibilité opérationnelle d'un ou plusieurs desdits éléments et/ou par un ou plusieurs paramètres de conditionnement externes au système, la configuration du système industriel étant agencée pour être modifiée en fonction du contexte opérationnel selon un critère de gestion comprenant une ou plusieurs règles "pertinentes", comme décrit par une table d'association entre les variables de commande et les variables commandées, la modification du système industriel ayant lieu automatiquement au moyen d'une attribution d'un ensemble pertinent à chaque variable commandée dans le tableau de règle pertinente, l'application de la table d'association des règles pertinentes et l'attribution d'une valeur numérique déterminée à l'ensemble pertinent de chaque variable de commande résultant de ladite application, le procédé étant **caractérisé en ce qu'**il comprend les étapes suivantes :

A. la définition de N critères de gestion, où $N \geq 1$ ;
B. la génération d'une population de N agents, où $M \geq 1$, dont chacun représente un contexte opérationnel ;
C. pour chacun desdits N critères de gestion définis dans l'étape A, la génération d'une population correspondante d'agents $Q_i$, où $i = 0, 1, ... (N - 1)$ et où $Q_i \geq 1$, chaque agent étant représentatif d'un ensemble d'une ou plusieurs règles pertinentes ;
D. la réalisation d'une sélection d'écosystème multi-espèces et d'un algorithme génétique itératif d'évolution, l'écosystème comprenant ladite population de M agents de contexte opérationnel et lesdites N populations des agents d'ensemble de règles pertinentes $Q_i$ de sorte que :

- dans chaque population d'ensemble de règles pertinentes correspondant à un critère de gestion, on laisse ces agents d'ensemble de règles pertinentes mieux répondre auxdits un ou plusieurs critères de gestion définis dans l'étape A à reproduire, conformément à une qualité d'adaptation eu égard à au moins un agent de contexte opérationnel, comme attribué à chaque agent d'un ou plusieurs ensembles de règles pertinentes, et
- dans la population de contextes opérationnels, on laisse les contextes opérationnels les plus hostiles à reproduire conformément à une qualité d'hostilité attribuée à chaque agent de contexte opérationnel généré dans l'étape B, et

E. à la fin de l'évolution de l'écosystème multi-espèces, on sélectionne l'ensemble d'une ou plusieurs règles pertinentes représentées par l'agent le plus approprié d'un ou plusieurs ensembles de règles pertinentes conformément à ladite qualité d'adaptation.

**2.** Procédé selon la revendication 1, **caractérisé en ce que** ladite étape B génère de façon aléatoire ladite population de M agents représentant le contexte opérationnel.

**3.** Procédé selon la revendication 1 ou 2, **caractérisé en ce que** ladite étape C génère de façon aléatoire lesdites N populations d'agents représentant l'ensemble de règles pertinentes $Q_i$.

**4.** Procédé selon l'une quelconque des revendications précédentes, **caractérisé en ce que** $Q_i \leq M$.

**5.** Procédé selon la revendication 4, **caractérisé en ce que** ladite étape D comprend les sous-étapes suivantes :

D.1. la distribution de ladite population de M agents de contexte opérationnel et desdites N populations d'agents d'ensemble de règles pertinentes $Q_i$ dans une grille de représentations bidimensionnelles toroïdale ayant un nombre de cellules égal à M de sorte que chaque cellule de la grille comprend :

- un agent de la population de contexte opérationnel ; et
- un agent d'un ou plusieurs des N populations d'ensemble de règles pertinentes relativement à un critère de gestion correspondant ;

D.2. pour chaque cellule de la grille,

D.2.1. la simulation de l'opération du système industriel dans le contexte opérationnel représenté par l'agent relatif appartenant à la cellule en modifiant la configuration du système conformément à la combinaison de tous les ensembles de règles pertinentes représentés par les agents en question appartenant à la cellule,

D.2.2. l'attribution d'une qualité d'adaptation $\varphi_i$ à chacun ou plusieurs agents d'ensembles de règles pertinentes appartenant à la cellule où la qualité d'adaptation $\varphi_i$ a une valeur intermédiaire entre une valeur numérique maximum X égale à la meilleure qualité d'adaptation et une valeur numérique minimum Y égale à la pire qualité d'adaptation,

D.2.3. l'attribution d'une qualité d'hostilité $\rho_c$ à l'agent de contexte opérationnel appartenant à la cellule égale à :

$$\rho_c = (X - \varphi_c)$$

où $\varphi_c$ est une qualité d'adaptation cumulative desdits N agents d'ensemble de règles pertinentes appartenant à la cellule en fonction des qualités d'adaptation $\varphi_i$ des agents d'ensemble de règles pertinentes individuelles appartenant à la cellule égales à :

$$\varphi_c = F(\varphi_0, \varphi_1, \dots \varphi_{N-1}) \; ;$$

D.3. la vérification de la condition d'arrêt de l'algorithme génétique itératif fourni par la convergence de la meilleure valeur des qualités d'adaptation cumulatives $\varphi_c$ de toutes les cellules de la grille,

D.4 si le résultat de la vérification de la sous-étape D.3 est négatif ou l'algorithme génétique itératif n'a pas encore été obtenu la condition d'arrêt,

D.4.1. le marquage de chaque cellule de la grille comme disponible pour être choisi dans la sous-étape subséquente,

D.4.2. la sélection aléatoire d'une première cellule de la grille parmi les cellules disponibles et son marquage comme inapproprié ;

D.4.3. la définition de la zone d'influence de la première cellule comme sélectionnée dans la sous-étape D.4.2., comprenant un nombre w de cellules ;

D.4.4. la sélection aléatoire de m cellules parmi lesdites w cellules de la zone d'influence définie dans la sous-étape D.4.3., où m ≤ w,

D.4.5. la sélection aléatoire d'une deuxième cellule parmi les m cellules choisies dans la sous-étape D.4.4., chacune desdites m cellules ayant une probabilité de sélection proportionnelle à la qualité d'adaptation cumulative respective $\varphi_c$,

D.4.6. pour chacun dedits N critères de gestion, l'application d'au moins un opérateur génétique de couplage ou traversant à une paire d'agents d'ensemble de règles pertinentes dont l'un appartient à la première cellule choisie dans la sous-étape D.4.2. et l'autre appartient à la deuxième cellule choisie dans la sous-étape D.4.5., les agents de ladite paire étant une partie de la population d'ensemble de règles pertinentes relativement aux critères de gestion considérés afin d'obtenir une paire d'agents fils appartenant à la même population de la paire d'agents les générant,

D.4.7. la sélection aléatoire de deux autres cellules parmi les cellules (m + 1) du groupe comprenant la première cellule choisie dans la sous-étape D.4.2. et les m cellules choisies dans la sous-étape D.4.4., chacune desdites cellules (m + 1) ayant une probabilité de sélection inversement proportionnelle à la qualité d'adaptation cumulative relative $\varphi_c$,

D.4.8. le remplacement de la totalité d'un ou plusieurs agents d'ensemble de règles pertinentes appartenant auxdites deux autres cellules choisies dans la sous-étape D.4.7. de telle façon que pour chacun desdits n critères de gestion, la paire d'agents d'ensemble de règles pertinentes appartenant à la population relativement aux critères de gestion considérés soit remplacée par la paire d'agents fils générée dans la sous-étape D.4.6.

appartenant à la même population,

D.4.9.1a sélection aléatoire d'une troisième cellule parmi les m cellules choisies dans la sous-étape D.4.4., chacune desdites m cellules ayant une probabilité de sélection proportionnelle à la qualité d'hostilité respective $\rho_c$ de l'agent de contexte opérationnel appartenant à la cellule ;

D.4.10. l'application d'au moins un opérateur génétique de couplage ou traversant à une paire d'agents de contexte opérationnel dont un appartient à la première cellule choisie dans la sous-étape D.4.2. et l'autre appartient à la troisième cellule choisie dans la sous-étape D.4.9. afin d'obtenir une paire d'agents fils de contexte opérationnel,

D.4.11. la sélection aléatoire de deux cellules supplémentaires parmi les cellules (m + 1) du groupe comprenant la première cellule choisie dans la sous-étape D.4.2. et les m cellules choisies dans la sous-étape D.4.4., chacune desdites (m + 1) cellules ayant une probabilité de sélection inversement proportionnelle à la qualité d'hostilité respective $\rho_c$ de l'agent de contexte opérationnel appartenant à la cellule,

D.4.12. le remplacement de la paire d'agents de contexte opérationnel appartenant aux deux cellules supplémentaires choisies dans la sous-étape D.4.11. avec la paire d'agents fils de contexte opérationnel générée dans la sous-étape D.4.10.,

D.4.13. si les sous-étapes précédentes D.4.2. à D.4.12. ont été itérées pour le nombre d'itérations inférieur à un nombre préétabli R, avec $R \leq M$, la répétition des sous-étapes listées précédemment en partant de la sous-étape D.4.2.,

D.4.14. si les sous-étapes précédentes D.4.2. à D.4.12. ont à la place été itérées pour le nombre d'itérations égal à R, l'application d'au moins un opérateur génétique de mutation à chaque contexte opérationnel et à chacun ou plusieurs agents d'ensemble de règles pertinentes appartenant à toutes les cellules de la grille,

D.4.15. la répétition de toutes les sous-étapes listées précédemment en commençant à partir de la sous-étape D.2.,

D.5. si le résultat de la vérification dans la sous-étape D.3. est négatif ou l'algorithme génétique itératif a atteint la condition d'arrêt, la fourniture comme critère de gestion optimum pour commander le système industriel complexe de l'ensemble d'une ou plusieurs règles pertinentes représentées par l'agent ayant la meilleure qualité d'adaptation $\varphi_i$ parmi les agents appartenant à la cellule ayant la meilleure qualité d'adaptation cumulative $\varphi_c$.

6. Procédé selon la revendication 5, **caractérisé en ce que** ladite étape D.1. répartit lesdites N populations d'agents d'ensemble de règles pertinentes $Q_i$ de telle façon que chaque cellule de la grille comporte un agent de chacune desdites N populations d'ensemble de règles pertinentes relativement aux critères de gestion correspondants.

7. Procédé selon la revendication 5 ou 6, **caractérisé en ce qu'**au moins un agent de contexte opérationnel représente un contexte opérationnel comprenant l'effet d'un ou plusieurs événements accidentels dont chacun a une probabilité d'apparition prédéfinie afin que la probabilité d'apparition cumulative des événements accidentels relatifs audit contexte opérationnel soit supérieure à une valeur de seuil minimum préétablie, les opérateurs génétiques appliqués audit au moins un agent de contexte opérationnel qui génèrent au moins un agent de contexte opérationnel résultant étant aptes à maintenir dans ledit au moins un agent de contexte opérationnel résultant ladite probabilité d'apparition cumulative dudit agent de contexte opérationnel de départ.

8. Procédé selon la revendication 7, **caractérisé en ce que** la probabilité d'apparition cumulative des événements accidentels relatifs audit au moins un agent de contexte opérationnel est inférieure à une valeur de seuil maximum préétablie.

9. Procédé selon l'une quelconque des revendications 5 à 8, **caractérisé en ce que** la valeur numérique maximum X de la qualité d'adaptation $\varphi_i$ est égale à 1.0. et **en ce que** la valeur numérique minimum Y de la qualité d'adaptation $\varphi_i$ est égale à 0.0.

10. Procédé selon l'une quelconque des revendications 5 à 9, **caractérisé en ce que** la qualité d'adaptation cumulative $\varphi_c$ desdits N un ou plusieurs agents d'ensemble de règles pertinentes appartenant à une seule cellule de la grille est égale à la qualité d'adaptation minimum $\varphi_i$ d'un ou plusieurs agents d'ensemble de règles pertinentes individuelles appartenant à ladite cellule, à savoir :

$$\varphi_c = \min \{\varphi_0, \varphi_1, \dots \varphi_{N-1}\}.$$

11. Procédé selon l'une quelconque des revendications 5 à 10, **caractérisé en ce que** dans l'étape D.4.2. la première cellule est choisie de façon aléatoire parmi les cellules disponibles de la grille d'une façon équiprobable.

**12.** Procédé selon l'une quelconque des revendications précédentes, **caractérisé en ce que** toutes les populations N d'agents représentant l'ensemble de règles pertinentes comportent le même nombre d'agents, à savoir $Q_i = Q$, où i = 0, 1, ..., (N - 1).

**13.** Procédé selon la revendication 12, **caractérisé en ce que** $Q_i = Q = M$, où i= 0,1,..., (N-1).

**14.** Procédé selon l'une quelconque des revendications précédentes, **caractérisé en ce que** le système industriel est un système d'eau pour la gestion et la commande d'un service d'eau, comprenant la collecte et/ou l'alimentation et/ou le traitement et/ou la distribution de volumes d'eau potable et/ou le retrait et/ou le traitement des eaux usées et/ou le retour des eaux usées à la masse de collecte, ledit système d'eau comprenant un réseau d'eau de conduits et/ou de cuves, les éléments de commande opérationnels dudit système d'eau comprenant des soupapes de contrôle et/ou de réglage et/ou des pompes et/ou des installations de pompage et/ou des éléments de commande et/ou de réglage, les variables de commande définissant l'état d'un élément de commande opérationnel correspondant comprenant un débit de pompage d'une pompe et/ou la qualité de réglage d'une soupape, les paramètres physiques définissant l'état de fonctionnement du système d'eau comprenant le débit dans un ou plusieurs conduits et/ou la pression du fluide dans un ou plusieurs points et/ou la concentration de produits contaminants dans le fluide et/ou le niveau de fluide dans une ou plusieurs cuves et/ou le débit pompé par une ou plusieurs installations de pompage et/ou la surface piezométrique. du fluide dans un ou plusieurs points, la disponibilité de fonctionnement d'un ou plusieurs desdits éléments comprenant la définition de l'état de défaut des éléments concernés, les paramètres de conditionnement externes au système comprenant la loi horaire des écoulements météoriques et/ou le taux de facturation d'énergie horaire et/ou la loi horaire des demandes d'eau potable et/ou des augmentations abruptes dans les demandes de volumes d'eau potable et/ou des écoulements météoriques exceptionnels.

**15.** Procédé selon la revendication 14, **caractérisé en ce que** lesdits N critères de gestion définis dans l'étape A comportent l'économie d'énergie et/ou la minimisation des pertes de matériau et/ou l'économie de ressource d'eau et/ou la satisfaction des contraintes hydrauliques et/ou la satisfaction des paramètres de qualité des volumes d'eau potable et/ou la satisfaction des niveaux minimums de la valeur de qualité du service.

**16.** Procédé automatique pour la gestion et la commande conformément à un critère de gestion optimum mis à jour dynamiquement pour un système industriel comprenant un ou plusieurs éléments de commande aptes à être actionnés, dont chacun prend un état décrit par au moins une variable de commande correspondante, l'ensemble des états pris par lesdits éléments définissant une configuration du système industriel, le système industriel prenant un état de fonctionnement défini par un ou plusieurs paramètres physiques, chacun décrit par au moins une variable commandée correspondante, le système industriel fonctionnant dans un contexte opérationnel défini par l'état opérationnel du système et/ou par la disponibilité opérationnelle d'un ou plusieurs desdits éléments et/ou par un ou plusieurs paramètres de conditionnement externes au système, la configuration du système industriel étant agencée pour être modifiée en fonction du contexte opérationnel conformément à un critère de gestion actuel comprenant une ou plusieurs règles "pertinentes", comme décrit par une table d'association entre des variables de commande et des variables commandées, le procédé étant **caractérisé en ce qu'**il comprend les étapes suivantes :

F. la surveillance du contexte opérationnel dans lequel le système concerné fonctionne jusqu'à la détection d'une variation de ce contexte opérationnel ;
G. le contrôle si oui ou non le critère de gestion courant est adapté à la gestion des variables du contexte opérationnel en modifiant la configuration du système industriel afin de satisfaire le critère de gestion courant ;
H. si le résultat de l'étape de contrôle G est négatif ;
H.1. la détermination d'un nouveau critère de gestion courant au moyen d'un procédé de critère de gestion de commande optimum selon l'une quelconque des revendications 1 à 15,
H.2. la vérification si oui ou non le nouveau critère de gestion courant, comme déterminé dans l'étape H.1., est adapté pour gérer la variation du contexte opérationnel au moyen d'une simulation de la variation de la configuration du système industriel en fonction du contexte opérationnel varié, conformément au nouveau critère de gestion courant, et si le résultat du contrôle est négatif, le retour à l'étape précédente H.1. ;
I. la modification de la configuration du système industriel afin de satisfaire au critère de gestion courant ;
J. la répétition des étapes énumérées précédemment en partant de l'étape F.

**17.** Procédé selon la revendication 16, **caractérisé en ce que**, après l'étape F et avant l'étape G, on met en oeuvre l'étape suivante :

K. la sélection d'une banque de données contenant un nombre O de critères de gestion prédéterminés, tous les critères de gestion contenus et en les marquant comme disponibles ;

et **en ce que**, pendant l'étape H, avant l'étape H.1., on met en oeuvre les étapes supplémentaires suivantes :

H.3. le contrôle de l'existence d'au moins un critère de gestion disponible dans ladite banque de données de critères de gestion prédéterminés ;

H.4. si le résultat du contrôle dans l'étape H.3. est négatif, la mise en oeuvre de l'étape H.1. ;

H.5. si le résultat du contrôle dans l'étape H.3. est positif, la sélection d'un des critères de gestion disponibles dans ladite banque de données de critères de gestion prédéterminés en l'adoptant comme critère de gestion courant en le marquant comme indisponible et en retournant à l'étape G.

**18.** Procédé, selon la revendication 16 ou 17, **caractérisé en ce que** lesdites étapes F, G, I et J sont mises en oeuvres par un système de commande de supervision et d'acquisition de données (SCADA) de la technologie numérique et d'architecture hiérarchique de niveau.

**19.** Procédé selon l'une quelconque des revendications 16 à 18, **caractérisé en ce que** ladite étape G pour contrôler que le critère de gestion courant est adapté à la gestion de la variation du contexte opérationnel comprend une analyse du comportement dans le temps d'au moins une valeur d'efficacité du système industriel.

**20.** Système électronique **caractérisé en ce qu'**il est adapté pour la mise en oeuvre du procédé automatique pour déterminer un critère de gestion optimum pour commander un système industriel selon l'une quelconque des revendications précédentes 1 à 15.

**21.** Programme informatique **caractérisé en ce qu'**il comprend un moyen de codage agencé pour exécuter lors de la mise en oeuvre sur un ordinateur le procédé automatique pour déterminer un critère de gestion optimum pour commander un système industriel selon l'une quelconque des revendications précédentes 1 à 15.

**22.** Milieu de mémoire ayant un programme mémorisé dans celui-ci, **caractérisé en ce que** le programme est le programme informatique selon la revendication 21.

**23.** Système automatique pour la gestion et la commande d'un système industriel, **caractérisé en ce qu'**il est agencé pour réaliser le procédé de commande et de gestion automatique conformément à un critère de gestion optimum, mis à jour de façon dynamique, d'un système industriel selon l'une quelconque des revendications 16 à 19.

Fig. 1

Fig. 2

X(t)   Y(t)

Fuzzy
sistem

Real system
emulator

X(t+1)  Y(t+1)

## Fig. 3

Fuzzy
sistem

SCADA

Pressure

Flow
rate

Valve closure
grade

Water mains
Ortigia

## Fig. 4

Genetic
algorithm

Individual

Individual
Set rules

Pressure(t)
Flow rate(t)

Fuzzy
sistem

Optimum
rules

Fitness

Valve closure
grade

Heraclitus

Pressure(t+1)
Pressure flow rate(t+1)

Evaluates individual
over 24 hours

## Fig. 5

## Fig. 6

Fig. 7

Fig. 8

Fig. 9

Fig. 10

Fig. 11

Fig.12

## Behaviour of cost function

**Fig.13**

## Behaviour of cost function

**Fig. 14**

F ig.15

Fig. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JOWITT et al.** Optimal Valve Control in Water Distribution Networks. *Journal of Water Resources Planning and Management, ASCE,* 1988, vol. 116 (4), 455-472